# EUROPEAN PATENT APPLICATION

(11) **EP 3 733 021 A1**
(43) Date of publication of application: **04.11.2020**
(21) Application number: 18896830.9
(22) Date of filing: 21.12.2018
(51) Int. Cl.: A47F 1/10

(54) **STORAGE DEVICE, MERCHANDISE DISPENSING SYSTEM AND INVENTORY ERROR DETECTION METHOD**

(30) Priority: 26.12.2017 JP 2017249805; 02.10.2018 JP 2018187671
(71) Applicant: Japan Tobacco Inc., Tokyo 105-8422 (JP)
(72) Inventor: OJIMA, Atsushi, Tokyo 105-8422 (JP); YAMATANI, Hiromi, Isesaki-shi, Gunma 372-8502 (JP); OTAKE, Yuki, Isesaki-shi, Gunma 372-8502 (JP)
(74) Representative: Hoffmann Eitle
(86) International application number: PCT/JP2018/047371
(87) International publication number: WO 2019/131553

(57) **Abstract**

A storage device (100) is signal-connected to storage furniture (200) which accommodates a plurality of types of products in a dispensable manner and stores a product aggregate in which a plurality of products of a same type are packaged together. The storage device (100) includes: a storage which is capable of accommodating a plurality of the product aggregates; and a storage area notification control unit (47) which performs a control to notify a storage area in the storage storing a replenishment-required product aggregate which is the product aggregate corresponding to a product of a type specified by a notification command signal transmitted from the storage furniture (200).

## Description

### TECHNICAL FIELD

The present invention relates to a storage device for storing a product aggregate in which a plurality of products having the same type are packaged together, a product dispensing system, and an inventory abnormality detection method.

### BACKGROUND ART

At a store such as a general convenience store, various brands of tobacco products are displayed in so-called storage furniture for each brand. (1) When a purchaser specifies a brand, a clerk selects the tobacco product of that brand from the storage furniture, or (2) the purchaser takes out and purchases the tobacco product of the desired brand from the storage furniture. Incidentally, the tobacco product described here is not an individual cigarette to be used for smoking, but a rectangular parallelepiped package accommodating a plurality of cigarettes or a rectangular parallelepiped package accommodating other tobacco products.

Generally, tobacco products are distributed in the form of cartons (product aggregates) in which a plurality of (for example, ten) tobacco products having the same type are packaged together. When the remaining number of tobacco products in the storage furniture decreases, the store clerk removes the packaging of the carton to turn the tobacco products into a loose state, and then replenishes the storage furniture with tobacco products.

Incidentally, Patent Document 1 discloses a dispensing device that automatically dispenses tobacco products of a desired brand.

### CITATION LIST

### PATENT DOCUMENT

Patent Document 1: JP 2011-207575 A

### SUMMARY OF THE INVENTION

### PROBLEM TO BE SOLVED BY THE INVENTION

However, there are many brands of tobacco products, and in stores, the inventory of cartons of tobacco products may be stored at random, for example, in a back counter, on storage furniture, or in a backyard storage shelf. Thus, it is not always easy for an operator such as a clerk to find a carton corresponding to a brand to be replenished in the storage furniture, and the work of replenishing the storage furniture with tobacco products is extremely troublesome.

Further, in addition to the tobacco products, as for a product having many types, it is not easy for the operator to quickly find a product aggregate corresponding to a product to be replenished in the storage furniture.

The present invention has been made in view of the above-described problems, and is to provide a storage device, a product dispensing system, and an inventory abnormality detection method which enable an operator to quickly find a product aggregate corresponding to a product to be replenished in storage furniture.

### MEANS FOR SOLVING THE PROBLEM

According to the present invention, there is provided a storage device which is signal-connected to storage furniture which accommodates a plurality of types of products in a dispensable manner and stores a product aggregate in which a plurality of products of a same type are packaged together, the device including:
a storage which is capable of accommodating a plurality of the product aggregates; and
a storage area notification control unit which performs a control to notify a storage area in the storage storing a replenishment-required product aggregate which is the product aggregate corresponding to a product of a type specified by a notification command signal transmitted from the storage furniture.

### EFFECT OF THE INVENTION

According to the present invention, an operator can quickly find a product aggregate corresponding to a product to be replenished in the storage furniture.

### BRIEF DESCRIPTION OF THE DRAWINGS

Fig. 1 is a front view illustrating a product dispensing system including a storage device according to a first embodiment.
Fig. 2 is a perspective view of the storage device according to the first embodiment.
Fig. 3 is a perspective view illustrating a drawer shelf of the storage device according to the first embodiment.
Fig. 4 is a perspective view illustrating a state where a drawer shelf is drawn from the storage device according to the first embodiment.
Fig. 5 is a perspective view illustrating another drawer shelf of the storage device according to the first embodiment.
Figs. 6A and 6B are front views for describing a lock mechanism provided in the storage device. Fig. 6A illustrates a state where the drawer shelf is locked by the lock mechanism, and Fig. 6B illustrates a state where a lock state of the drawer shelf by the lock mechanism is released.
Fig. 7 is a side sectional view of storage furniture provided in the product dispensing system according to the first embodiment.
Fig. 8 is a perspective view illustrating a moving unit and the like of the storage furniture provided in the product dispensing system according to the first embodiment.
Fig. 9 is a schematic block diagram of the product dispensing system according to the first embodiment.
Fig. 10 is a block diagram of the storage device according to the first embodiment.
Fig. 11 is a block diagram of the storage furniture provided in the product dispensing system according to the first embodiment.
Fig. 12 is a diagram illustrating an example of a display operation on a display device provided in the product dispensing system according to the first embodiment.
Fig. 13 is a diagram illustrating an example of the display operation on the display device provided in the product dispensing system according to the first embodiment.
Fig. 14 is a diagram illustrating an example of the display operation on the display device provided in the product dispensing system according to the first embodiment.
Fig. 15 is a diagram illustrating an example of the display operation of the display device provided in the product dispensing system according to the first embodiment.
Fig. 16 is a perspective view of storage furniture provided in a product dispensing system according to the second embodiment.
Figs. 17A to 17C are views for describing a magazine included in the storage furniture provided in the product dispensing system according to the second embodiment. Fig. 17A is a perspective view, and Fig. 17B and Fig. 17C are schematic plan views.
Fig. 18 is a schematic block diagram of the product dispensing system according to the second embodiment.
Fig. 19 is a perspective view of storage furniture for describing a product dispensing system according to a third embodiment and a fourth embodiment.
Fig. 20A is a perspective view illustrating a modification of a partition of the drawer shelf, Fig. 20B is a front sectional view illustrating a modification of the partition of the drawer shelf, and Fig. 20C is a perspective view of a product aggregate.
Fig. 21 is a front sectional view illustrating an example of a detection sensor provided on a bottom plate of a drawer shelf.
Figs. 22A and 22B are plan views of a drawer shelf of a storage device according to a fifth embodiment, and Fig. 22C is a view illustrating a partition which is detachably provided on the drawer shelf of the storage device according to the fifth embodiment.
Figs. 23A and 23B are front views of a storage of a storage device according to a sixth embodiment.

### DESCRIPTION OF EMBODIMENTS

Hereinafter, embodiments of the present invention will be described with reference to the drawings. Note that, in all the drawings, similar components are denoted by the same reference numerals, and description thereof will not be repeated.

### First Embodiment

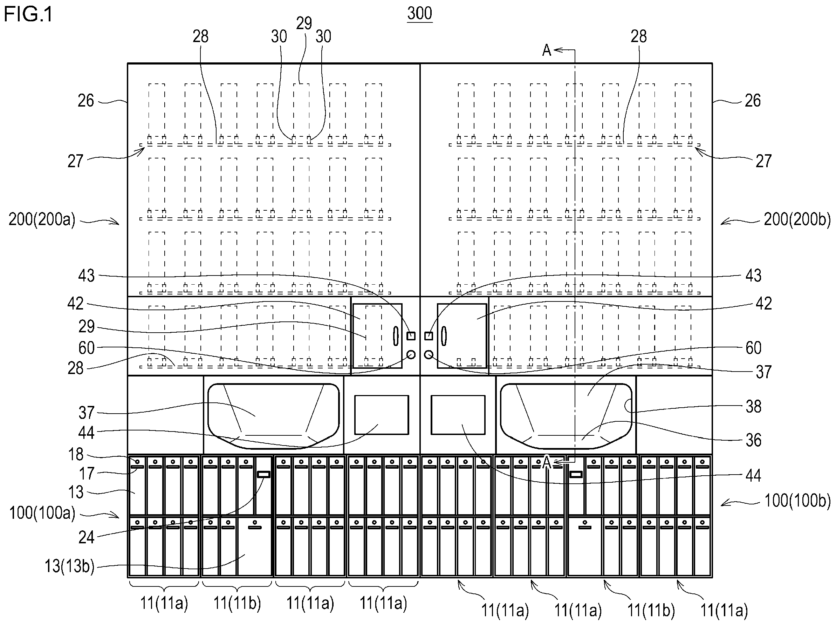

First, a first embodiment will be described with reference to Figs. 1 to 14.

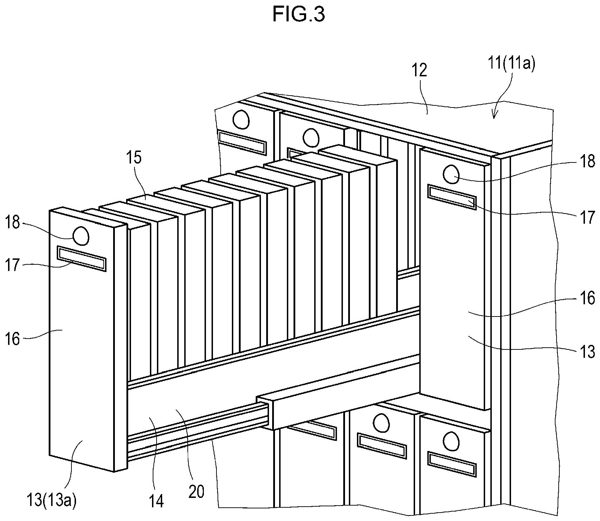

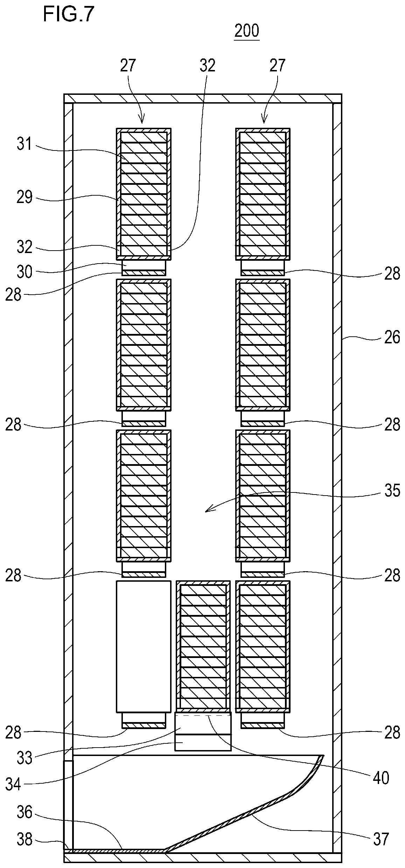

A storage device 100 according to this embodiment (for example, a lower part of a product dispensing system 300 illustrated in Fig. 1) is signal-connected to storage furniture 200 (for example, an upper portion of the product dispensing system 300 illustrated in Fig. 1) which accommodates a plurality of types of products 31 (Fig. 7) in a dispensable manner and stores a product aggregate 15 (Fig. 3) in which a plurality of products 31 (Fig. 7) of the same type are packaged together.

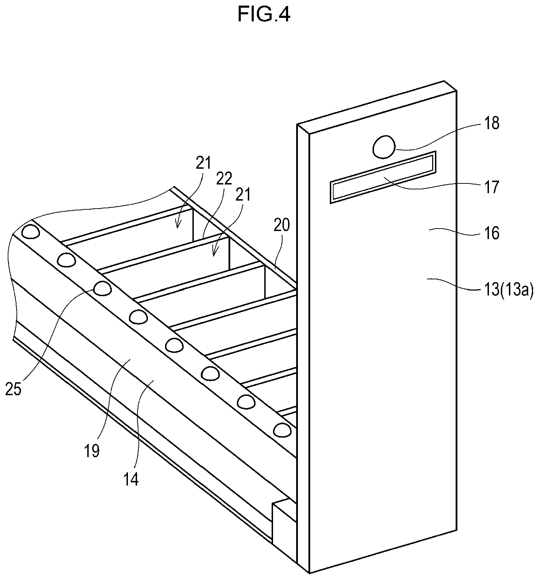

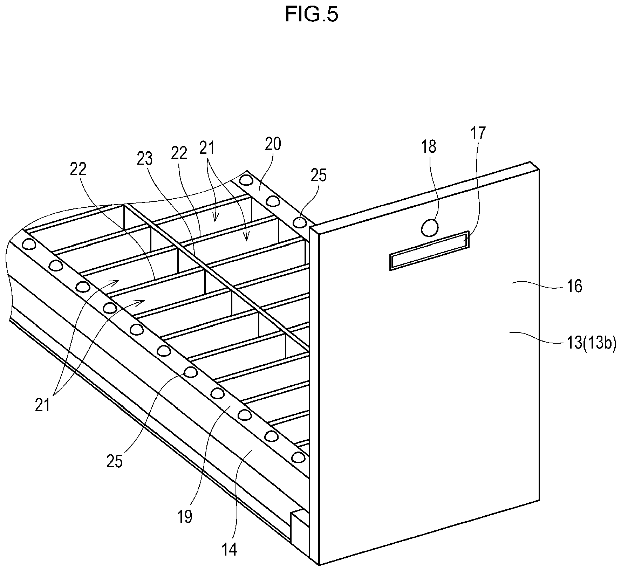

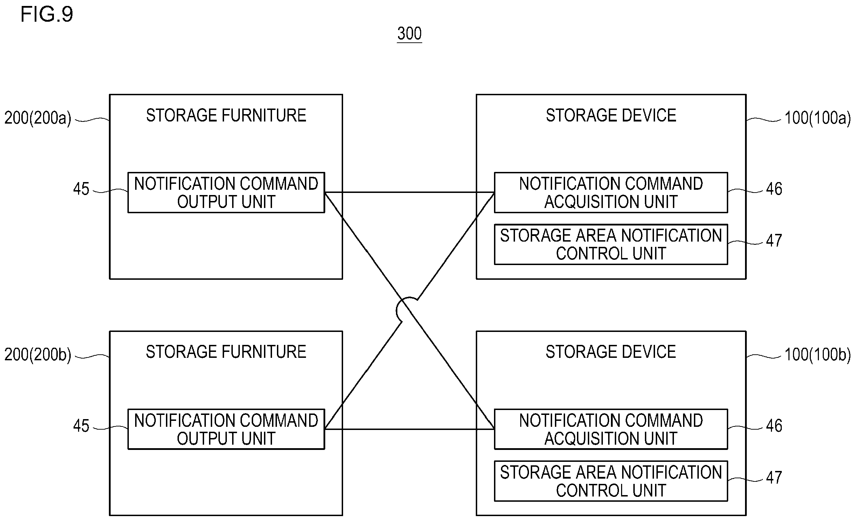

The storage device 100 includes a storage 11 which is capable of accommodating a plurality of product aggregates 15, and a storage area notification control unit 47 (Fig. 9) which performs a control to notify a storage area 21 (Figs. 4 and 5) in the storage 11 storing a replenishment-required product aggregate which is the product aggregate 15 corresponding to a product 31 of a type specified by a notification command signal transmitted from the storage furniture 200.

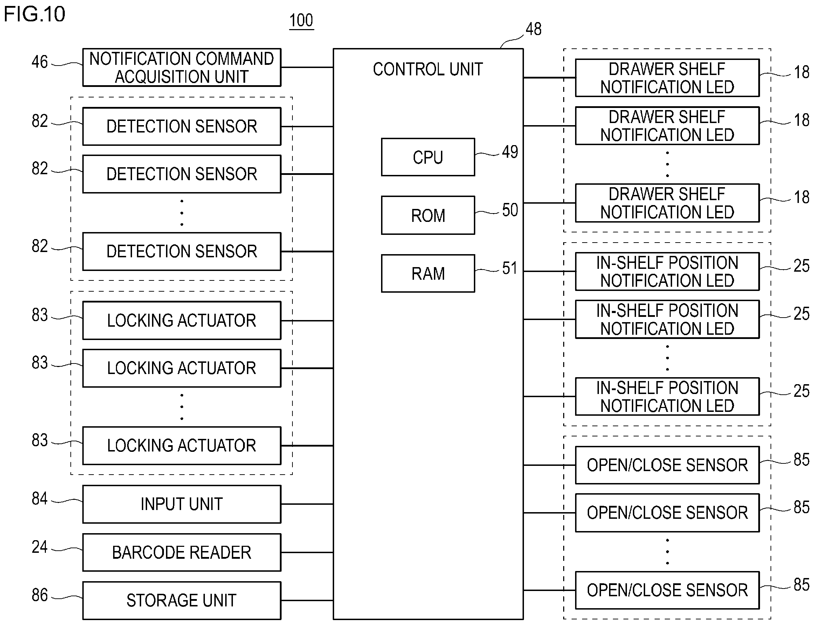

The storage area notification control unit 47 is a functional configuration of the storage device 100. For example, a control unit 48 illustrated in Fig. 10 functions as the storage area notification control unit 47.

The storage device 100 further includes a notification unit which performs a notification operation under the control of the storage area notification control unit 47. In the case of this embodiment, the notification unit includes a display body (for example, a light emitting member) such as a drawer shelf notification LED 18 illustrated in Figs. 1 and 3 and an in-shelf position notification LED 25 illustrated in Fig. 4. Incidentally, the notification unit may perform notification by voice together, or may perform notification only by voice.

According to this embodiment, the storage area notification control unit notifies the storage area 21 in the storage 11 which stores the replenishment-required product aggregate which is the product aggregate 15 corresponding to the product 31 of the type specified by the notification command signal transmitted from the storage furniture 200. Thus, the operator such as a clerk can quickly find the replenishment-required product aggregate. Accordingly, the operator can take out the replenishment-required product aggregate from the storage device 100 and replenish the storage furniture 200 with the product 31 included in the replenishment-required product aggregate.

Further, since the product aggregate 15 can be stored in the storage device 100, even in a case where the product aggregate 15 is a carton of tobacco products or the like, it is not necessary to store the inventory of the product aggregate 15 at random, for example, in a back counter, on storage furniture, or in a backyard storage shelf, and a store can be made orderly.

The product 31 is distributed in the form of a product aggregate 15 in which the plurality of products 31 of the same type are packaged together. The product 31 is typically a tobacco product. The tobacco products are generally distributed in the form of a so-called carton in which ten tobacco products are packaged together. In a case where the product 31 is a tobacco product, the product aggregate 15 is, for example, a carton. The carton is also called a parcel.

The tobacco product described here does not mean an individual cigarette to be used for smoking, but a rectangular parallelepiped package accommodating a plurality of cigarettes or a rectangular parallelepiped package accommodating other tobacco products other than cigarettes. Examples of the other tobacco products include snuff tobacco, pipe tobacco, and related articles such as a suction tool used for the other tobacco products. More specifically, examples of the other tobacco products may include articles related to electronic cigarette which are a type of aerosol inhaler.

Further, as the products 31 other than the tobacco product, in addition to articles related to aerosol inhalers, favorite products such as confectionery, and other foods and drinks can be cited.

In the present invention, the description that the storage furniture 200 accommodates a plurality of types of products 31 in a dispensable manner means that the storage furniture 200 may be provided with a dispensing mechanism for dispensing the product 31 and actively dispense the product 31 accommodated in the storage furniture 200 or the storage furniture 200 may accommodate a plurality of types of products 31 in a state where the products can be passively dispensed by manual operation of an operator or the like.

In the case of this embodiment, the storage furniture 200 has a dispensing mechanism for dispensing the product 31.

The description that the storage device 100 is signal-connected to the storage furniture 200 means that the storage device 100 and the storage furniture 200 may be wired (directly or indirectly) through an electric cable and the storage device 100 can acquire the notification command signal from the storage furniture 200, or the storage device 100 and the storage furniture 200 may be wirelessly communicated (directly or indirectly) and the storage device 100 can acquire the notification command signal from the storage furniture 200 by wireless communication.

A relay unit that relays a signal transmitted and received between the storage device 100 and the storage furniture 200 may be interposed in the communication between the storage device 100 and the storage furniture 200. The relay unit may be a hub that aggregates wirings from the storage furniture 200 or wirings from the storage devices 100 or may have a function of aggregating or recording information (such as information indicating inventory status and information indicating a product type) transmitted from each storage furniture 200 or each storage device 100.

In the case of this embodiment, the storage furniture 200 is configured to manage (store and update at any time) the number (inventory quantity) of products 31 accommodated in the storage furniture 200 for each type of the products 31, and the determination as to whether or not the product 31 should be replenished in the storage furniture 200 is made automatically by the storage furniture 200 according to the inventory status of each type of the product 31 in the storage furniture 200. In a case where the storage furniture 200 determines that a certain type of product 31 should be replenished in the storage furniture 200, the storage furniture 200 transmits (outputs) an electric signal (notification command signal) to the storage device 100. That is, the product 31 to be replenished in the storage furniture 200 is specified by the notification command signal output from the storage furniture 200 to the storage device 100.

When receiving the notification command signal from the storage furniture 200, the storage device 100 notifies the storage area 21 in the storage 11 which stores the replenishment-required product aggregate which is the product aggregate 15 corresponding to the product 31 to be replenished in the storage furniture 200.

More specifically, for example, the storage device 100 includes a storage unit 86 (Fig. 10) which is a nonvolatile memory. The storage unit 86 stores, for each type of the product 31, a table indicating a correspondence relation between the product 31 and the product aggregate 15 corresponding to the product 31. Further, the control unit 48 of the storage device 100 stores the type and the storage area of the product aggregate 15 stored in the storage device 100 in the storage unit 86, and updates the storage as needed. When receiving the notification command signal, the control unit 48 determines the type of the product aggregate 15 (that is, the replenishment-required product aggregate) corresponding to the specified product 31 with reference to the storage unit 86, determines the storage area 21 of the product aggregate 15, and performs a control to notify the storage area 21.

As described above, in the case of this embodiment, when the notification command signal is transmitted from the storage furniture 200 according to the inventory status of the product 31 in the storage furniture 200, the storage area notification control unit 47 performs a control to notify the storage area of the replenishment-required product aggregate corresponding to the notification command signal.

Hereinafter, this embodiment will be described in more detail.

Fig. 1 is a front view illustrating the product dispensing system 300 including the storage device 100 according to the first embodiment. As illustrated in Fig. 1, the product dispensing system 300 includes the storage device 100 according to this embodiment and the storage furniture 200.

The product dispensing system 300 is installed in a store such as a convenience store.

For example, the storage furniture 200 are stacked and arranged on the storage device 100. However, in the present invention, the positional relationship between the storage device 100 and the storage furniture 200 is not limited to this example.

In the example of Fig. 1, the product dispensing system 300 includes two storage devices 100 and two storage furniture 200. The two storage devices 100 are laterally arranged side by side, and the storage furniture 200 is arranged on each storage device 100. In the following description, the left storage device 100 may be referred to as a storage device 100a, and the right storage device 100 may be referred to as a storage device 100b. Further, the storage furniture 200 on the left may be referred to as storage furniture 200a, and the storage furniture 200 on the right may be referred to as storage furniture 200b. However, the number of storage devices 100 and the number of storage furniture 200 included in the product dispensing system 300 are not limited to this example.

Each storage device 100 includes, for example, a plurality of storages 11. In the example of Fig. 1, each storage device 100 includes four storages 11 arranged laterally in a row. Incidentally, in the present invention, the number of the storages 11 provided in the storage device 100 and the positional relationship between the storages 11 are not limited to this example.

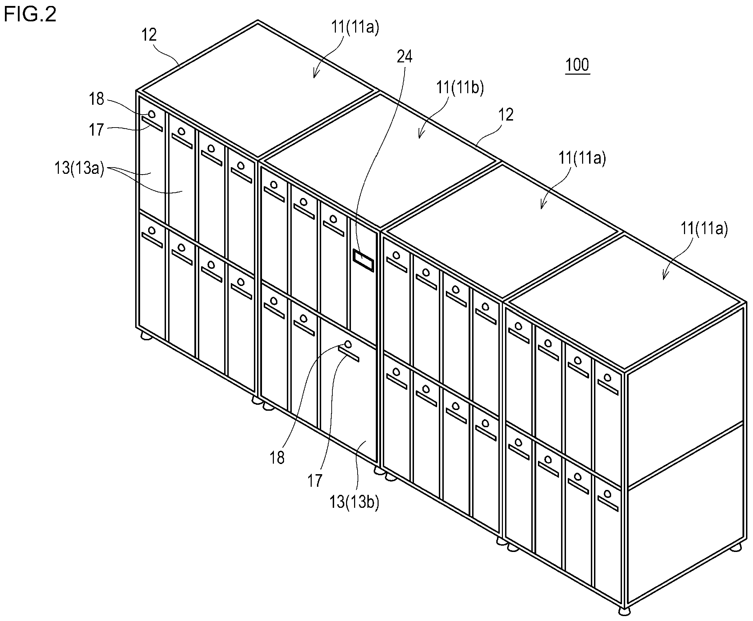

As illustrated in Fig. 2, the storage 11 includes, for example, a rectangular frame body 12 and a plurality of drawer shelves 13 (shelf) held by the frame body 12.

As illustrated in Fig. 3, each drawer shelf 13 includes a shelf body 14 that supports the product aggregate 15 and a front wall portion 16 provided at the front end of the shelf body 14 and standing vertically. The front wall portion 16 extends above the shelf body 14.

A handle portion 17 for drawing operation and a drawer shelf notification LED 18 (first display body) are provided on the front side of the front wall portion 16.

For example, the shelf body 14 is configured in a tray shape having a bottom plate that supports the product aggregate 15, a pair of left and right side walls 19 and 20 (Figs. 4 and 5), and a rear wall (not shown in the drawings).

Each drawer shelf 13 can accommodate a plurality of product aggregates 15. In a state where the drawer shelf 13 is drawn from the frame body 12, the operator can grasp and take the product aggregate 15 from the drawer shelf 13.

When the operator hangs the finger on the handle portion 17 and draws the handle forward, the drawer shelf 13 can be drawn forward from the frame body 12, and when the operator pushes the front wall portion 16 rearward, the drawer shelf 13 can be accommodated in the frame body 12.

When the drawer shelf 13 is accommodated in the frame body 12, the front surface of the front wall portion 16 is substantially flush with the front end of the frame body 12.

The arrangement of the drawer shelf notification LED 18 on the front wall portion 16 is not particularly limited, but may be, for example, the upper portion of the front wall portion 16. The drawer shelf notification LED 18 is arranged on the upper portion of the front wall portion 16, whereby the visibility of the drawer shelf notification LED 18 can be improved.

Further, the arrangement of the handle portion 17 on the front wall portion 16 is not particularly limited, but may be, for example, the upper portion of the front wall portion 16. The handle portion 17 is arranged on the upper portion of the front wall portion 16, whereby the operability of the handle portion 17 is improved.

For example, the drawer shelf notification LED 18 is arranged on the upper side of the handle portion 17.

In the two storages 11 illustrated in Fig. 2, the left storage 11 includes, for example, drawer shelves 13 arranged in two upper and lower stages, and four drawer shelves 13 are arranged laterally in each stage.

On the other hand, the right storage 11 illustrated in Fig. 2 includes, for example, drawer shelves 13 arranged in two upper and lower stages. Four drawer shelves 13 are arranged laterally in the lower stage, and three drawers 13 are arranged laterally in the upper stage. The upper space of the drawer shelf 13 at the lower right end is an area where a barcode reader 24 is arranged.

In the case of this embodiment, the storage 11 includes the storage 11 having no barcode reader 24 (hereinafter, referred to as a storage 11a in some cases) and a storage 11 having the barcode reader 24 (hereinafter, referred to as a storage 11b in some cases). However, each storage 11 may have the barcode reader 24, or the storage 11 (storage device 100) may not have the barcode reader 24.

In the case of this embodiment, examples of the drawer shelf 13 include the drawer shelves 13 (Figs. 3 and 4: hereinafter, referred to as a drawer shelf 13a in some cases) capable of accommodating a plurality of product aggregates 15 back and forth in a row and the drawer shelves 13 (Fig. 5; hereinafter, referred to as a drawer shelf 13b in some cases) capable of accommodating a plurality of product aggregates 15 in a plurality of rows (for example, two rows) (the direction of the row is the front and rear direction, and the rows are arranged in the right and left direction). That is, the storage areas 21 that can store respective product aggregates 15 are arranged in a row inside the drawer shelf 13a. Further, the storage areas 21 that can store respective product aggregates 15 are arranged in two rows inside the drawer shelf 13b. Incidentally, the right-left width of the drawer shelf 13b is about twice the right-left width of the drawer shelf 13a.

As illustrated in Fig. 4, the shelf body 14 of the drawer shelf 13a is provided with a partition 22 for mutually partitioning storage areas 21 arranged adjacent to each other in front and rear.

As illustrated in Fig. 5, the shelf body 14 of the drawer shelf 13b is provided with the partition 22 for mutually partitioning storage areas 21 arranged adjacent to each other in front and rear and a partition 23 for mutually partitioning storage areas 21 arranged laterally adjacent to each other.

Incidentally, preferably, the drawer shelf 13a includes a partition unit configured by unitizing the plurality of partitions 22 to be detachable from the shelf body 14. Similarly, the drawer shelf 13b preferably includes a partition unit configured by unitizing the partition 23 and the plurality of partitions 22 so as to be detachable from the shelf body 14. As the partition units for the drawer shelf 13a, for example, a plurality of types of partition units which are different in a planar shape of the storage area 21, a height dimension of the partition 22, and the like are prepared. Similarly, as the partitioning unit for the drawer shelf 13b, for example, a plurality of types of partitioning units which are different in a planar shape of the storage area 21, a height dimension of the partition 22 or the partition 23, and the like are prepared. In this way, when the type or combination of products accommodated in the drawer shelf 13 is changed, the change can be handled easily by replacing the partition unit mounted on the shelf body 14 with a partition unit having another structure.

The partition unit is configured to include, for example, the in-shelf position notification LED 25 (second display body) and a detection sensor 82 in addition to the partition. More preferably, the partition unit includes a bottom plate, and the detection sensor 82 (described later) is provided on the bottom plate.

Further, preferably, the shelf body 14 is provided with the terminal for signal transmission and power supply to the in-shelf position notification LED 25 and the terminal for power supply to the detection sensor 82 and signal transmission from the detection sensor 82. In this case, the partition unit includes terminals corresponding to the terminals of the shelf body 14. Further, when the partition unit is mounted on the shelf body 14, each terminal of the shelf body 14 and each terminal of the partition unit are electrically connected to each other.

The drawer shelf 13 is provided with the in-shelf position notification LED 25 for notifying the position of each storage area 21 in the drawer shelf 13.

In the drawer shelf 13a, the in-shelf position notification LED 25 is provided, for example, on the upper end surface of the left side wall 19. In the drawer shelf 13a, the in-shelf position notification LED 25 is arranged at a position adjacent to the left of each storage area 21.

On the other hand, in the drawer shelf 13b, the in-shelf position notification LED 25 is provided, for example, on each of the upper end surface of the left side wall 19 and the upper end surface of the right side wall 20. In the drawer shelf 13b, each in-shelf position notification LED 25 is arranged at a position adjacent to the left of each storage area 21 in the left row, and each in-shelf position notification LED 25 is arranged at a position adjacent to the right of each storage area 21 in the right row.

Incidentally, in the case of this embodiment, an example will be described in which the in-shelf position notification LED 25 (second display body) is provided corresponding to each storage area 21, but the present invention is not limited to this example. For example, if the arrangement is made such that the individual storage areas 21 can be specified by the notification by the second display body, the second display body may not necessarily be arranged corresponding to the individual storage areas 21.

Further, in the drawer shelf 13b, the in-shelf position notification LED 25 may be provided in an upper portion of the partition 23 at the center in a lateral width direction. Further, a light guide member (for example, a lens member made of a transparent or translucent resin material) that guides the light emitted from the in-shelf position notification LED 25 to the right and left sides of the upper end of the partition 23 may be provided on the upper portion of the partition 23. In this way, the operator can easily recognize the light emission state of the in-shelf position notification LED 25 also from the side of the drawer shelf 13b.

The in-shelf position notification LED 25 is provided on each of the right and left sides of the partition 23, and the light emission state of the in-shelf position notification LED 25 corresponding to the storage area 21 to be notified among the left and right in-shelf position notification LEDs 25 may be changed selectively.

Here, when the storage area notification control unit 47 changes the light emission state of the drawer shelf notification LED 18, it is possible to notify the operator of the position of the drawer shelf 13 holding the replenishment-required product aggregate.

Further, when the storage area notification control unit 47 changes the light emission state of the in-shelf position notification LED 25, it is possible to notify the operator of the position of the storage area 21 holding the replenishment-required product aggregate in the drawer shelf 13.

Here, for example, changing the light emission state of the drawer shelf notification LED 18 may be changing from an unlit state to a lit state, may be changing from a lit state to a blinking state, or may be changing a luminescent color.

The same applies to changing the light emission state of the in-shelf position notification LED 25.

As described above, the storage 11 includes a plurality of shelves (for example, drawer shelves 13) each capable of holding a plurality of product aggregates 15. The storage area notification control unit 47 includes a shelf notification control unit which performs a control to notify a shelf holding a replenishment-required product aggregate and a holding location notification control unit which performs a control to notify a location where the replenishment-required product aggregate is held in the shelf. The shelf notification control unit and the holding location notification control unit are functional components of the storage area notification control unit 47.

The operator can recognize which shelf is holding the replenishment-required product aggregate by the notification by the shelf notification control unit and can recognize the location where the replenishment-required product aggregate is held in the shelf by the notification of the holding location notification control unit. Therefore, the operator can more quickly find the product aggregate 15 corresponding to the product 31 to be replenished in the storage furniture 200.

The storage 11 is provided with the frame body 12 which accommodates the shelf in a drawable manner, and the notification of the shelf notification control unit is performed in a manner recognizable from the outside of the storage device 100 in a state where the shelf is accommodated in the frame body 12.

That is, as described above, for example, the drawer shelf notification LED 18 is provided on the front side of the front wall portion 16, and thus the drawer shelf notification LED 18 can be visually recognized from the outside of the storage device 100 in a state where the drawer shelf 13 is pushed into (accommodated in) the frame body 12. Incidentally, as long as a shelf (drawer shelf 13) holding a replenishment-required product aggregate can be specified, a light emitting member such as an LED or the like, which performs a notification operation under the control of the shelf notification control unit, or another notification unit may be arranged in other parts of the storage 11, or may be arranged in a part other than the storage 11 or further in equipment other than the storage device 100.

Incidentally, it is preferable that the drawer shelf notification LED 18 of the drawer shelf 13b is provided corresponding to each row of the storage area 21. That is, a pair of right and left drawer shelf notification LEDs 18 may be provided on the front wall portion 16 of the drawer shelf 13b. In this case, the storage area notification control unit changes the light emission state of the drawer shelf notification LED 18 corresponding to the storage area 21 to be notified among the drawer shelf notification LEDs 18 on the left and right sides of the drawer shelf 13b, so as to notify the row of the storage area 21 having the storage area 21 to be notified as well as which shelf (drawer shelf 13b) has the storage area 21 to be notified.

The notification by the holding location notification control unit is performed in a manner recognizable in a state where at least the shelf is drawn from the frame body 12.

That is, as described above, the in-shelf position notification LED 25 is provided, for example, on the upper end surface of the side wall 19 or the side wall 20 of the shelf body 14, so that the in-shelf position notification LED 25 is visible from outside the storage device 100 in a state where the drawer shelf 13 is drawn from the frame body 12

Incidentally, In the case of this embodiment, in a state where the drawer shelf 13 is pushed into the frame body 12, the shelf body 14 and the in-shelf position notification LED 25 are invisible from outside the storage device 100. However, even in a state where the drawer shelf 13 is pushed into the frame body 12, the in-shelf position notification LED 25 may be visible from outside the storage device 100 (the notification by the holding location notification control unit may be recognized).

The shelf includes a first display body (drawer shelf notification LED 18) which is arranged at a portion exposed to the outside in a state where the shelf is accommodated in the frame body 12 and a second display body (in-shelf position notification LED 25) which notifies the individual storage areas so as to be able to be specified. The shelf notification control unit performs notification by changing the display state of the first display body, and the holding location notification control unit performs notification by changing the display state of the second display body.

Incidentally, in this embodiment, the first display body and the second display body are light emitting units (for example, an LED). However, the present invention is not limited to this example, and at least one of the first display body and the second display body may be a display device such as a liquid crystal display device. Further, the display device configuring the first display body or the second display body may be a device (for example, a reflection type liquid crystal device) that does not include a light emitting element such as an LED and performs display using external light.

The drawer shelf 13 includes a detection sensor 82 (Fig. 10) that detects the product aggregate 15 in a case where the product aggregate 15 is arranged in each storage area 21. The detection sensor 82 can be, for example, a weight sensor provided on the bottom plate of the shelf body 14. However, the detection sensor 82 may be another type of sensor such as an optical sensor or a capacitance sensor.

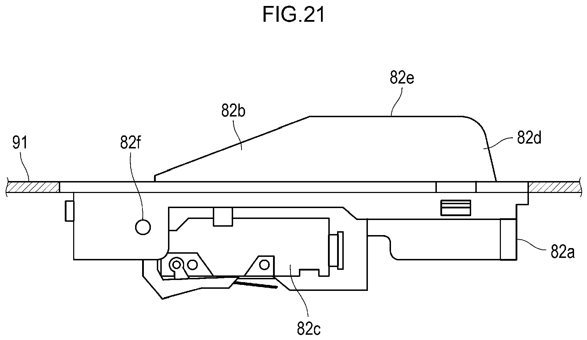

As an example, as illustrated in Fig. 21, the detection sensor 82 is provided on the bottom plate of the shelf body 14 (or the bottom plate of the partition unit described above). The detection sensor 82 includes a main body 82a fixed to the bottom plate 91 of the shelf body 14 or the partition unit, a lever 82b pivotally supported on the main body 82a in a swingable manner, and a sensor 82c.

The swing axis 82f of the lever 82b is arranged horizontally. A part of the lever 82b is an upward protrusion 82d that protrudes upward from the main body 82a and the bottom plate in a no-load state (normal state) in which the product aggregate 15 is not placed.

When the product aggregate 15 is arranged in the storage area 21, and the lever 82b swings due to the weight of the product aggregate 15, the sensor 82c detects the swing of the lever 82b.

Here, the upper surface 82e of the upward protrusion 82d of the lever 82b is normally horizontal as illustrated in Fig. 21. For this reason, when the product aggregate 15 is arranged in the storage area 21, it is possible to suppress the product aggregate 15 from being caught by the upward protrusion 82d, and to smoothly perform the work of arranging the product aggregate 15 in the storage area 21.

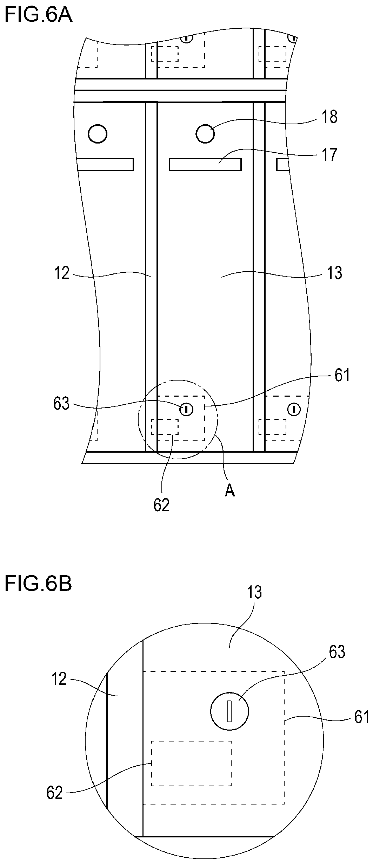

The storage device 100 includes a lock mechanism 61 (Figs. 6A and 6B) for selectively allowing the drawer shelf 13 in which the notification is performed by the storage area notification control unit 47 to be able to be drawn from the frame body 12.

Figs. 6A and 6B are front views for describing the lock mechanism 61. Fig. 6A illustrates a state where the drawer shelf 13 is locked by the lock mechanism 61, and Fig. 6B illustrates a state where a lock state of the drawer shelf 13 by the lock mechanism 61 is released.

As illustrated in Fig. 6A, in the case of this embodiment, the lock mechanism 61 is provided on each drawer shelf 13.

For example, the lock mechanism 61 includes a locking member 62, a locking actuator 83 (Fig. 10) such as a motor, a power transmission mechanism (not shown in the drawings) for transmitting power from the locking actuator 83 to the locking member 62 to move the locking member 62 between a locked position and an unlocked position, and a key insertion unit 63 for performing a key operation of manually moving the locking member 62 between the unlocked position and the locked position by an operator during a power failure or the like.

The locked position is a position where when the drawer shelf 13 is about to be drawn from the frame body 12, the locking member 62 is locked (caught) with respect to the frame body 12 so as to restrict the drawer shelf 13 from being drawn from the frame body 12. The unlocked position is a position where when the drawer shelf 13 is drawn from the frame body 12, the locking member 62 is not locked (not caught) to the frame body 12, and the drawer shelf 13 is allowed to be drawn from the frame body 12.

The key insertion unit 63 has a keyhole into which a release key (not shown in the drawings) is inserted. When the operator inserts the release key into the keyhole to turn the release key, the locking member 62 can be moved from the locked position to the unlocked position or can be moved from the unlocked position to the locked position.

Incidentally, herein, an example is described in which the lock mechanism 61 is provided on the drawer shelf 13, and the locking member 62 is caught by the frame body 12 in the locked state. However, the lock mechanism 61 may be provided on the frame body 12, and the locking member 62 may be hooked on the drawer shelf 13 in the locked state.

The storage device 100 preferably also includes a lock release mechanism for allowing the operator to manually release the locked state of the lock mechanism 61 during a power failure or the like. For example, the lock mechanism 61 is configured to include a lever member for unlocking, and by inserting a rod-shaped body such as a ballpoint pen from the front side of the drawer shelf 13, the lever member swings, and the locked state of the lock mechanism 61 is released.

Fig. 7 is a side cross-sectional view of the storage furniture 200 in this embodiment, which is a cross-sectional view along the line A-A of Fig. 1.

As illustrated in either Fig. 1 or 7, in the case of this embodiment, the storage furniture 200 includes, for example, a rectangular parallelepiped housing 26 and a storage shelf 27 arranged inside the housing 26. The storage furniture 200 includes, for example, two front and rear storage shelves 27 as illustrated in Fig. 7.

The storage shelf 27 is provided with a plurality of stages (four stages in the example of Fig. 7) of shelf plates 28. Each shelf plate 28 extends, for example, laterally.

A support base 30 for detachably supporting a magazine 29 is provided on the shelf plate 28.

The shelf plate 28 supports a plurality of magazines 29 via the support base 30.

As illustrated in Fig. 7, the magazine 29 is formed in a vertically long box shape, and a plurality of products 31 are accommodated in a vertically stacked state in the magazine 29.

The magazine 29 is formed with, for example, a discharge port 32 for discharging the product 31 at the lowest stage in the magazine 29. For example, the discharge port 32 is formed at each of the front and rear of the lower end of the magazine 29, and the product 31 can be discharged to both the front and the rear of the magazine 29.

The magazine 29 includes, for example, a cover that can be opened and closed by an operator, and the product 31 can be replenished in the magazine 29 with the cover opened.

The magazine 29 can be replenished with the products 31 in carton units (ten products 31 are replenished).

In the case of this embodiment, the same brand of products 31 are accommodated in one magazine 29, and the products 31 of mutually different brands are accommodated in respective magazines 29. However, a plurality of magazines 29 accommodating the products 31 of the same brand may be provided.

A part of the shelf plate 28 of the front storage shelf 27 serves as an input magazine installation unit which is a location where the magazine 29 to be input into the storage furniture 200 from the outside is installed. For example, as illustrated in Fig. 1, an opening/closing door 42 is provided at the lower portion of the front of the storage furniture 200, and the input magazine installation unit is arranged behind the opening/closing door 42. A pair of support bases 30 are also arranged in the input magazine installation unit, and the magazine 29 can be installed on the pair of support bases 30.

In a state where the opening/closing door 42 is opened by the operator, the magazine 29 can be installed in the input magazine installation unit from the outside of the storage furniture 200, or the magazine 29 installed in the input magazine installation unit can be taken out of the storage furniture 200.

Incidentally, Fig. 1 illustrates a state in which the magazine 29 is installed in the input magazine installation unit of the storage furniture 200a, but the magazine 29 is not installed in the input magazine installation unit of the storage furniture 200b.

Each storage furniture 200 includes, for example, one opening/closing door 42 and one input magazine installation unit.

In the storage shelf 27 of each storage furniture 200, a portion other than the input magazine installation unit serves as a dispensing target product accommodation unit in which the magazine 29 accommodating the dispensing target product 31 is installed.

The storage furniture 200 includes an identification information reading unit that reads identification information of the product 31. The identification information reading unit is, for example, a barcode reader 43 arranged at a position near the opening/closing door 42 on the front surface of the storage furniture 200.

The storage furniture 200 includes a display device 44 such as a liquid crystal display device for performing various navigation displays. The display device 44 is arranged, for example, on the front surface of the storage furniture 200.

Further, a light emission notification unit such as an LED 60 may be arranged on the front surface of the storage furniture 200.

A shooter 37 which guides the product 31 discharged from the magazine 29 to flow down toward a takeout position 36 and dispenses the product is provided at a lower portion inside the housing 26. The takeout position 36 is, for example, a flat portion provided at the lower end of the shooter 37.

A takeout opening 38 for taking out the product 31 dispensed to the takeout position 36 is formed at the lower portion of the front surface of the housing 26.

When the product 31 is dispensed to the takeout position 36, the operator can insert the hand into the housing 26 through the takeout opening 38 and take out the product 31.

The storage furniture 200 further includes a moving unit 33 which moves vertically and laterally within the housing 26 to dispense the product 31 and transport the magazine 29 and a moving mechanism (not shown in the drawings) which moves the moving unit 33 vertically and laterally.

The moving mechanism is, for example, a rail 34 which holds the moving unit 33 to be movable laterally, a horizontal moving mechanism which laterally moves the moving unit 33 on the rail 34, and a vertical movement mechanism which vertically moves the moving unit 33 together with the rail 34.

An area between the front and rear storage shelves 27 serves as a movement area 35 in which the moving unit 33 moves vertically and laterally.

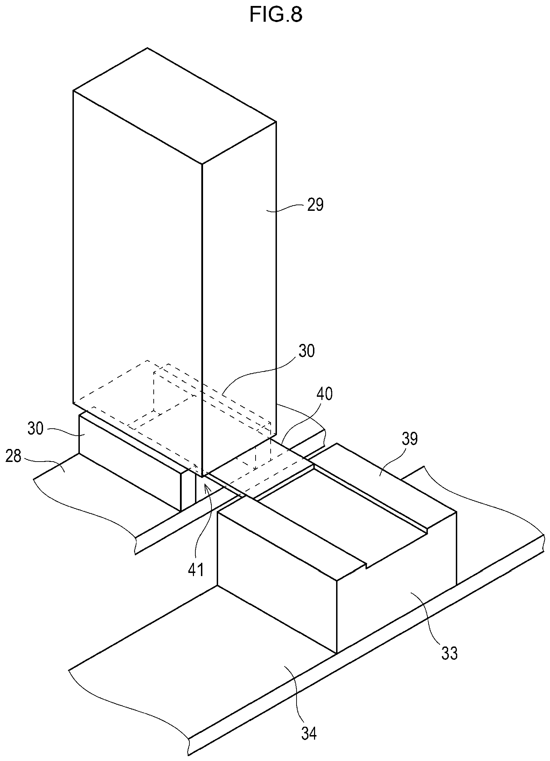

Fig. 8 is a perspective view illustrating the moving unit 33 and the like.

As illustrated in Fig. 8, the moving unit 33 includes a main body 39 held on the rails 34 and a retractable portion 40 which can be retracted forward and backward with respect to the main body 39.

For example, the support bases 30 are arranged at predetermined intervals in the right and left direction on the shelf plate 28. Each magazine 29 is supported on the support base 30 by being bridged between a pair of support bases 30 adjacent to each other. Therefore, in a state where the magazine 29 is supported by the support base 30, a gap exists between the lower surface of the magazine 29 and the upper surface of the shelf plate 28. This gap serves as an insertion space 41 into which the retractable portion 40 can be inserted.

Incidentally, it is preferred that the lower surface of the magazine 29 and the support base 30 are engaged with each other in order to restrict the magazine 29 from moving forward and backward relative to the support base 30 when the product 31 is discharged from the magazine 29.

Here, the operation of the moving unit 33 will be described.

First, an operation in which the moving unit 33 delivers the magazine 29 from the dispensing target product accommodation unit to the input magazine installation unit will be described.

In this operation, first, the moving mechanism moves the moving unit 33 to a position facing the delivery target magazine 29. At this time, the height position of the retractable portion 40 (the position of the retractable portion 40 in the vertical direction) is adjusted to the height position of the insertion space 41 below the delivery target magazine 29.

Next, as illustrated in Fig. 8, the retractable portion 40 is projected from the main body 39, and retractable portion 40 is inserted into the insertion space 41 below the magazine 29. Here, in a case where the delivery target magazine 29 is supported by the front storage shelf 27, the retractable portion 40 is projected forward from the main body 39, and in a case where the delivery target magazine 29 is supported by the rear storage shelf 27, the retractable portion 40 is projected rearward from the main body 39.

Next, the moving mechanism raises the rail 34, thereby raising the moving unit 33 (including the retractable portion 40) integrally with the rail 34. At this time, the magazine 29 is transferred from above the support base 30 onto the retractable portion 40, and the magazine 29 is lifted above the support base 30.

Next, the magazine 29 is held above the main body 39 by storing the retractable portion 40 in the main body 39.

In this state, the moving mechanism moves the moving unit 33 to a position facing the input magazine installation unit. At this time, the height position of the retractable portion 40 is set to a position above the portion supporting the magazine 29 in the pair of support bases 30 of the input magazine installation unit.

Next, the magazine 29 is moved to a position above the pair of support bases 30 of the input magazine installation unit by projecting the retractable portion 40 forward from the main body 39.

Next, the rail 34 is lowered so as to lower the moving unit 33 (including the retractable portion 40) and the magazine 29 integrally with the rail 34. At this time, the magazine 29 is transferred from above the retractable portion 40 onto the pair of support bases 30.

In this way, the magazine 29 is installed (delivered) in the input magazine installation unit.

Next, an operation will be described in which the moving unit 33 carries the magazine 29 from the input magazine installation unit to the empty area (the area where the magazine 29 can be carried in) in the dispensing target product accommodation unit.

In this operation, first, the moving mechanism moves the moving unit 33 to a position facing the input magazine installation unit. At this time, the height position of the retractable portion 40 is adjusted to the height position of the insertion space 41 below the carrying target magazine 29.

Next, the retractable portion 40 is projected forward from the main body 39, and the retractable portion 40 is inserted into the insertion space 41 below the magazine 29 of the input magazine installation unit.

Next, the moving mechanism raises the rail 34, thereby raising the moving unit 33 integrally with the rail 34. At this time, the magazine 29 of the input magazine installation unit is transferred from above the support base 30 onto the retractable portion 40, and the magazine 29 is lifted above the support base 30.

Next, the magazine 29 is held above the main body 39 by storing the retractable portion 40 in the main body 39.

In this state, the moving mechanism moves the moving unit 33 to a position facing the empty area. At this time, the height position of the retractable portion 40 is set to a position above the portion supporting the magazine 29 in the pair of support bases 30 of the empty area.

Next, the magazine 29 is moved to a position above the pair of support bases 30 in the empty area by projecting the retractable portion 40 forward from the main body 39. Here, in a case where there is an empty area in the front storage shelf 27, the retractable portion 40 is projected forward from the main body 39, and in a case where there is an empty area in the rear storage shelf 27, the retractable portion 40 is projected rearward from the main body 39.

Next, the rail 34 is lowered so as to lower the moving unit 33 and the magazine 29 integrally with the rail 34. At this time, the magazine 29 is transferred from above the retractable portion 40 onto the pair of support bases 30 in the empty area.

In this way, the magazine 29 is installed (delivered) in the dispensing target product accommodation unit.

Next, an operation will be described in which the product 31 is dispensed from the magazine 29 installed in the dispensing target product accommodation unit.

In this operation, first, the moving mechanism moves the moving unit 33 to a position facing the magazine 29 accommodating the dispensing target product 31. At this time, the height position of the retractable portion 40 is adjusted to the height position of the discharge port 32 of the magazine 29.

Next, the retractable portion 40 is protruded from the main body 39, the retractable portion 40 is inserted into the magazine 29 from one discharge port 32 of the magazine 29, and the lowermost product 31 in the magazine 29 is extruded from the magazine 29 through the other discharge port 32. Here, in a case where the magazine 29 accommodating the dispensing target product 31 is supported by the front storage shelf 27, the retractable portion 40 is projected forward from the main body 39, and in a case where the magazine 29 accommodating the dispensing target product 31 is supported by the rear storage shelf 27, the retractable portion 40 is projected rearward from the main body 39.

Next, the product 31 extruded from the magazine 29 falls from the magazine 29, is captured by the shooter 37, and is dispensed to the takeout position 36.

Next, a schematic block configuration of the product dispensing system 300 according to this embodiment will be described with reference to Fig. 9.

As described above, the product dispensing system 300 includes, for example, two storage devices 100 and two storage furniture 200.

Each storage furniture 200 includes a notification command output unit 45 which outputs a notification command signal to each storage device 100. The notification command output unit 45 is configured by an output interface with the storage device 100, or is configured by a wireless communication unit capable of performing wireless communication with the storage device 100.

Each storage device 100 includes a notification command acquisition unit 46 which acquires a notification command signal from the notification command output unit 45 and a storage area notification control unit 47.

The notification command acquisition unit 46 is configured by an input interface with the storage furniture 200, or is configured by a wireless communication unit capable of performing wireless communication with the storage furniture 200.

Incidentally, as described above, a relay unit which relays a signal may be interposed between the storage device 100 and the storage furniture 200.

Next, a more detailed block configuration of the storage device 100 will be described with reference to Fig. 10.

As illustrated in Fig. 10, the storage device 100 includes the above-described notification command acquisition unit 46, the detection sensor 82, the locking actuator 83, the control unit 48, the barcode reader 24, the drawer shelf notification LED 18, and the in-shelf position notification LED 25.

The detection sensor 82 is provided, for example, for each storage area 21.

The locking actuator 83 is provided for each drawer shelf 13.

The drawer shelf notification LED 18 is provided for each drawer shelf 13.

The in-shelf position notification LED 25 is provided, for example, for each storage area 21 as described above.

Further, the storage device 100 includes an input unit 84 which receives an input of the quantity (number) of the product aggregates 15 accommodated in the storage device 100 and the like. The input unit 84 is configured by, for example, a ten-key operation unit or an operation tablet.

Further, the storage device 100 includes an open/close sensor 85 which detects whether each drawer shelf 13 is in a state of being drawn from the frame body 12 (open state) or a state of being stored in the frame body 12 (closed state). The open/close sensor 85 is provided corresponding to each drawer shelf 13.

The control unit 48 includes a ROM 50 which stores and holds a control program, a CPU 49 which executes a control operation according to the control program, and a RAM 51 which functions as a work area of the CPU 49 and the like.

The control unit 48 receives various information such as the notification command signal acquired by the notification command acquisition unit 46, the detection signal from each detection sensor 82, the information input to the input unit 84, and the reading result obtained by the barcode reader 24.

On the basis of the various types of input information, the control unit 48 generates and updates various management data, controls the operation of the locking actuator 83, the drawer shelf notification LED 18, and the in-shelf position notification LED 25, stores the information in the storage unit 86, and reads the information from the storage unit 86.

The control board configuring the control unit 48 can be attached, for example, to the rear portion of the drawer shelf 13 of the storage device 100. In this way, wirings between the frame body 12 and the drawer shelf 13 can be reduced, and disconnection and the like due to bending of the wirings can be suppressed.

Further, preferably, a partition plate for restricting access of a hand or the like to the control unit arrangement area is arranged between the arrangement area of the control unit 48 (control board) in the drawer shelf 13 (hereinafter, the control unit arrangement area) and the storage area 21 formed on the near side with respect to the control unit arrangement area. In this way, it is possible to suppress the occurrence of troubles caused by insertion of a hand or the like into the control unit arrangement area.

Incidentally, each of the storage device 100a and the storage device 100b may include the notification command acquisition unit 46 and the control unit 48, or any one of the storage device 100a and the storage device 100b may include the notification command acquisition unit 46 and the control unit 48.

In this embodiment, for the sake of simplicity, it is assumed that any one of the storage device 100a or the storage device 100b includes the notification command acquisition unit 46 and the control unit 48. Further, the inventory quantity of the product aggregate 15 for each type of the product aggregate 15 in the storage device 100, and the inventory quantity of the product 31 for each type of the product 31 in the storage device 100 is the total number of the inventory quantity in the storage device 100a and the inventory quantity in the storage device 100b. Further, it is assumed that the inventory quantity of the product 31 for each type of the product 31 in the storage furniture 200 is the total number of the inventory quantity in the storage device 100a and the inventory quantity in the storage device 100b.

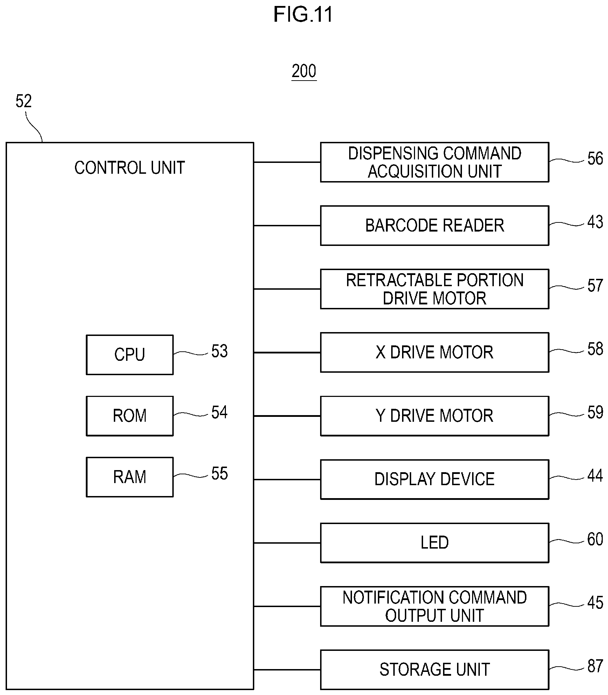

Next, a more detailed block configuration of the storage furniture 200 will be described with reference to Fig. 11.

As illustrated in Fig. 11, the storage furniture 200 includes a control unit 52, a dispensing command acquisition unit 56, a barcode reader 43, a retractable portion drive motor 57, an X drive motor 58, a Y drive motor 59, a display device 44, an LED 60, and a notification command output unit 45 and a storage unit 87. The storage unit 87 is a nonvolatile memory.

The control unit 52 includes a ROM 54 which stores and holds a control program, a CPU 53 which executes a control operation according to the control program, and a RAM 55 which functions as a work area of the CPU 53 and the like.

The dispensing command acquisition unit 56 is, for example, a wireless communication unit that wirelessly communicates with a portable information terminal such as a smartphone to acquire information, an operation unit provided on the outer surface of the housing 26, or an operation tablet provided at a position separated from the housing 26. In the case of this embodiment, for example, the wireless communication unit is configured to receive a touch operation by the portable information terminal.

The operator (here, the purchaser or clerk of the product 31) performs a predetermined operation on the dispensing command acquisition unit 56, whereby the brand of the product 31 purchased by the purchaser can be specified.

Incidentally, by the operation on the dispensing command acquisition unit 56, the brands of the various products 31 may be capable of being searched and specified by various search methods such as Japanese syllabary search, brand name search, tar value search, and nicotine value search. Alternatively, the purchaser may be specified on the basis of the personal authentication information of the purchaser (information authenticated by voiceprint authentication, vein authentication, reading of a recording medium, or the like), and the brand purchased last time may be searched.

Here, the specifying of the brand of the product 31 purchased by the purchaser by the operation on the dispensing command acquisition unit 56 is referred to as that the dispensing command acquisition unit 56 acquires the dispensing command. The dispensing command acquired by the dispensing command acquisition unit 56 is notified from the dispensing command acquisition unit 56 to the control unit 52.

Incidentally, each of the storage furniture 200a and the storage furniture 200b may include the dispensing command acquisition unit 56 and the control unit 52, or any one of the storage furniture 200a and the storage furniture 200b may include the dispensing command acquisition unit 56 and the control unit 52.

In this embodiment, for the sake of simplicity, it is assumed that any one of the storage furniture 200a and the storage furniture 200b includes the dispensing command acquisition unit 56 and the control unit 52.

The reading result by the barcode reader 43 is also input to the control unit 52.

The retractable portion drive motor 57 is an actuator for performing the retracting operation of the retractable portion 40, and is mounted on the moving unit 33.

The X drive motor 58 is an actuator for moving the moving unit 33 in the horizontal direction (right and left direction), and is provided in a moving mechanism.

The Y drive motor 59 is an actuator for moving the rail 34 in the vertical direction, and is provided in a moving mechanism.

The control unit 52 controls the operation of the retractable portion drive motor 57, the X drive motor 58, the Y drive motor 59, the display device 44, and the LED 60 on the basis of the information acquired by the dispensing command acquisition unit 56 and the information read by the barcode reader 43, outputs the notification command signal from the notification command output unit 45 to the storage device 100, stores information in the storage unit 87, or reads the information from the storage unit 87.

The control unit 52 controls the X drive motor 58, the Y drive motor 59, and the retractable portion drive motor 57 to perform a process of dispensing the product 31 from the magazine 29 accommodating the product 31 of the brand corresponding to the dispensing command on the moving unit 33.

Next, the operation of the product dispensing system 300 will be described.

First, a dispensing operation of the product 31 from the storage furniture 200 when the purchaser purchases the product 31 will be described.

For example, the purchaser performs a touch operation on the dispensing command acquisition unit 56 using the portable information terminal.

Incidentally, the brand of the product 31 purchased by the purchaser on a daily basis (hereinafter, a purchase brand), the number of the products 31 to be purchased in one purchase opportunity (hereinafter, a purchase number) are registered in advance in the portable information terminal.

Then, the dispensing command acquisition unit 56 acquires information indicating the brand of the product 31 purchased by the purchaser and the number of the purchased products 31, and outputs the information to the control unit 52.

The storage unit 87 stores the storage location of the magazine 29 for each brand of the products 31 and stores the remaining number of the products 31 in each magazine 29.

The control unit 52 determines the inventory quantity of the purchase brand in the storage furniture 200 on the basis of the information input from the dispensing command acquisition unit 56 and determines whether the inventory quantity is equal to or more than the purchase number.

In a case where the inventory quantity of the purchased brand is equal to or more than the purchase number, the control unit 52 operates the moving unit 33 by controlling the X drive motor 58, the Y drive motor 59, and the retractable portion drive motor 57, and performs a process of dispensing the purchase number of purchased products 31 from the magazine 29 accommodating the purchase brand.

As a result, the purchase number of products 31 are dispensed to the takeout position 36. When the product 31 is dispensed to the takeout position 36, the LED 60 may be turned on or blinked.

Incidentally, in a case where there are a plurality of cashier counters in a store, the dispensing command acquisition unit 56 may be provided for each cashier counter. In this case, for example, it is preferable that the LED 60 emits light in a luminescent color corresponding to each cashier counter.

The clerk can sell the dispensed product 31 to the purchaser.

When the products 31 are dispensed from the storage furniture 200, and as a result, the inventory quantity in the storage furniture 200 decreases to a predetermined replenishment threshold for the product 31 of a certain brand, a list of brands requiring replenishment is notified to the operator, for example, by being displayed on the display device 44. Then, for example, each time the number of brands which reaches the replenishment threshold increases, the list of brands displayed on the display device 44 increases.

Next, the operation of notifying the storage location of the replenishment-required product aggregate in the storage device 100 and the operation of replenishing the storage furniture 200 with the product 31 will be described.

In a case where the operator performs an operation of selecting a brand to be replenished in the storage device 100 (for example, in a case where the display device 44 is a touch panel, a touch operation performed on the display device 44), the notification command signal is output to the notification command acquisition unit 46 of the storage device 100 from the dispensing command acquisition unit 56 of the storage furniture 200 while the moving unit 33 automatically delivers out the magazine 29 accommodating the product 31 of the brand to the input magazine installation unit.

Here, in order to notify the operator of the input magazine installation unit of the storage furniture 200a or the storage furniture 200b where the magazine 29 to be replenished with the product 31 is delivered, the LED 60 of either the storage furniture 200a or the storage furniture 200b may be selectively turned on or blinked.

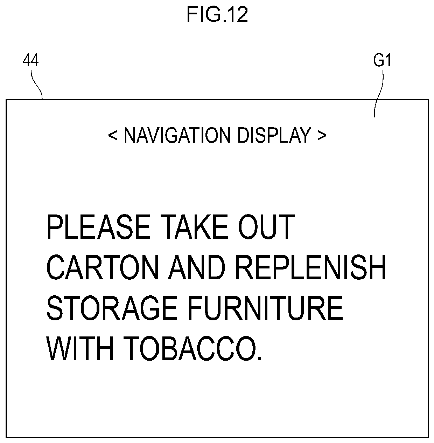

Further, for example, as in a navigation screen G1 illustrated in Fig. 12, a display notification such as "Please take out the carton and replenish the storage furniture with tobacco." may be performed on the display device 44.

In the storage device 100, when the notification command acquisition unit 46 acquires the notification command signal, under the control of the control unit 48, the notification of the position of the storage area 21 storing the product aggregate 15 of the brand corresponding to the notification command signal, that is, the replenishment-required product aggregate is performed.

That is, first, the drawer shelf 13 having the storage area 21 is notified by turning on or blinking the drawer shelf notification LED 18, for example. Thereafter, when the drawer shelf 13 is drawn from the frame body 12, the position of the storage area 21 is notified, for example, by turning on or blinking the in-shelf position notification LED 25 next to the storage area 21 storing the replenishment-required product aggregate.

Here, in a case where a plurality of replenishment-required product aggregates corresponding to the products 31 of the same brand are stored in the storage device 100, preferably, the storage device 100 preferentially notifies the storage area 21 of the replenishment-required product aggregate with the earliest sell-by date or timing of being put into the storage device 100.

That is, in a case where a plurality of product aggregates 15 of the same type are stored in the storage 11, the storage area notification control unit preferentially notifies the storage area 21 of the product aggregate 15 with the earliest expiration date or timing of being put into the storage 11 among the plurality of product aggregates.

Here, in a case where the product 31 is a tobacco product, the expiration date is a sell-by date. However, in a case where the product 31 is another type of product, the expiration date is a use-by date or an expiration date other than the use-by date and the sell-by date.

Here, the lock mechanism 61 of each drawer shelf 13 maintains the locking member 62 in the locked position in the normal state such that the operator can prevent the drawer shelf 13 not having the storage area 21 from being drawn accidentally. On the other hand, the lock mechanism 61 of the drawer shelf 13 having the storage area 21 for storing the replenishment-required product aggregate moves the locking member 62 to the unlocked position in a case where the notification command acquisition unit 46 acquires the notification command signal.

That is, the storage device 100 selectively allows the drawing operation from the frame body 12 with respect to the drawer shelf 13 having the storage area 21 in which the replenishment-required product aggregate is stored.

The operator draws the drawer shelf 13 having the storage area 21 storing the replenishment-required product aggregate from the frame body 12, and the product aggregate 15 is taken out from the storage area 21, which is detected by the detection sensor 82 corresponding to the storage area 21.

For example, when the product aggregate 15 is taken out from the storage area 21 storing the replenishment-required product aggregate, the control unit 48 ends the notification by the drawer shelf notification LED 18 and the in-shelf position notification LED 25.

The operator taking out the replenishment-required product aggregate from the storage furniture 200 opens the opening/closing door 42 of the storage furniture 200, takes out the magazine 29 from the input magazine installation unit, and fills the magazine 29 with the product 31 in the replenishment-required product aggregate.

Further, the operator causes the barcode reader 43 of the storage furniture 200 to read the barcode of the product 31 in the magazine 29, returns the magazine 29 to the input magazine installation unit, and closes the opening/closing door 42.

Then, the moving unit 33 carries the magazine 29 into the dispensing target product accommodation unit.

Further, the storage furniture 200 may include, for example, an operation unit for instructing the storage furniture 200 to perform the operation of carrying the magazine 29 from the input magazine installation unit into the dispensing target product accommodation unit. In this case, after the operator returns the magazine 29 filled with the products 31 to the input magazine installation unit and closes the opening/closing door 42, the moving unit 33 carries the magazine 29 into the dispensing target product accommodation unit by operating the operation unit.

Here, by holding the barcode of the product 31 over the barcode reader 43 and reading the barcode of the product 31, the control unit 52 of the storage furniture 200 identifies the type (brand) of the product 31.

Further, when the moving unit 33 carries the magazine 29 into the dispensing target product accommodation unit, the control unit 52 of the storage furniture 200 recognizes that the storage furniture 200 is replenished with the ten products 31 of the type corresponding to the notification command signal.

Next, the operation of replenishing the storage device 100 with the product aggregate 15 will be described.

The replenishment of the product aggregate 15 to the storage device 100 is performed, for example, after a plurality of product aggregates 15 are delivered to the store in a state of being accommodated in a storage box such as cardboard, and the inspection of these product aggregates 15 is completed.

When the storage device 100 is replenished with the product aggregate 15, first, the operator causes the barcode reader 24 to read the barcode of the product aggregate 15.

Then, for example, the control unit 48 of the storage device 100 turns on or blinks the drawer shelf notification LEDs 18 of all the drawer shelves 13 having the empty storage areas 21 (the storage area 21 where the product aggregate 15 is not stored) to notify the drawer shelves 13, and turns on or blinks all the in-shelf position notification LEDs 25 corresponding to the empty storage areas 21 to notify the position of the empty storage areas 21. Further, the control unit 48 moves the locking members 62 of the lock mechanisms 61 of all the drawer shelves 13 having the empty storage areas 21 to the unlocked position.

Next, when the operator draws the drawer shelf 13 having the empty storage area 21 from the frame body 12 and places the product aggregate 15 in the empty storage area 21, the detection sensor 82 corresponding to the storage area 21 detects the product aggregate 15, and turning-on or blinking of the in-shelf position notification LED 25 corresponding to the storage area 21 ends.

Thereafter, when the open/close sensor 85 detects that the operator stores the drawer shelf 13 in the frame body 12, the control unit 48 moves the locking member 62 of the lock mechanism 61 of the drawer shelf 13 to the locked position.

Thereby, the replenishment of the product aggregate 15 to the storage device 100 is completed.

Incidentally, the completion of the replenishment operation may be notified in such a manner that the light emission state of the drawer shelf notification LED 18 (first display body) or the in-shelf position notification LED 25 (second display body) may be changed (for example, the lit state is changed to the unlit state) each time the product aggregate 15 is placed (replenished) in the storage area 21.

Similarly, when the product aggregate 15 is taken out from the storage area 21, the completion of the removal operation may be notified by changing the light emission state of the drawer shelf notification LED 18 or the in-shelf position notification LED 25. In the case of taking-out, in a case where it is necessary to take out two or more product aggregates 15, and the product aggregate 15 to be taken out next remains, the in-shelf position notification LED 25 corresponding to the storage area 21 accommodating the next product aggregate 15 is turned on.

In a case where the operator places the product aggregate 15 in the storage area 21 while neglecting the operation of reading the bar code of the product aggregate 15 by the barcode reader 24, a warning may be issued by changing (for example, blinking) the light emission state of the in-shelf position notification LED 25 corresponding to the storage area 21. This warning may be a buzzer or voice guidance output from a speaker. Further, in a case where the operator places the product aggregate 15 in the storage area 21 while neglecting the operation of reading the barcode of the product aggregate 15, and then closes the drawer shelf 13 (accommodates the drawer shelf 13 in the frame body 12), a warning may be issued by changing (for example, blinking) the light emission state of the drawer shelf notification LED 18 (first display body) on the front surface of the front wall portion 16.

Incidentally, in the storage device 100, for each type of the product aggregate 15, the number of the product aggregates 15 stored in the storage device 100 is managed (stored in the storage unit 86 and updated as needed).

Further, since each product aggregate 15 includes ten products 31, the control unit 48 calculates and obtains the inventory quantity of the products 31 in the storage device 100 for each type of the products 31, and manages (stores in the storage unit 86 and updates as needed) the inventory quantity.

Here, by causing the barcode reader 24 to read the barcode of the product aggregate 15 to be replenished to the storage device 100, the control unit 48 of the storage device 100 recognizes the type of the product aggregate 15 to be replenished in the storage device 100.

Then, the control unit 48 stores the type of the product aggregate 15 replenished in the storage device 100 and the timing (for example, date) when the product aggregate 15 is replenished in the storage device 100 in association with each other in the storage unit 86.

Further, information indicating the expiration date (sell-by date) of the cigarette in the product 31 included in the product aggregate 15 is attached to the outer surface of the product aggregate 15, and the barcode reader 24 also has a function to read the information. The control unit 48 causes the storage unit 86 to store the sell-by date of the product aggregate 15 in addition to the type and the replenishment timing of the product aggregate 15.

In this way, the product dispensing system 300 includes an input area notification control unit which performs a control to notify the storage area 21 where the product aggregate 15 needs to be placed when the product aggregate 15 is replenished in the storage device 100 and a replenishment timing storage unit (for example, the storage unit 86) which stores the timing when the product aggregate 15 is replenished in the storage device 100 in association with the type of the product aggregate 15. The control unit 48 has a function as the input area notification control unit.

Since the timing when the product aggregate 15 is replenished in the storage device 100 or the expiration date of the product aggregate 15 and the type of the product aggregate 15 are stored in the storage unit 86 in association with each other, in a case where a plurality of product aggregates 15 of the same type are stored in the storage device 100, as described above, the storage device 100 can preferentially notifies the storage area 21 of the replenishment-required product aggregate with the earliest expiration date or timing of being put into the storage device 100.

However, when the barcode reader 24 reads the barcode of the product aggregate 15 when the product aggregate 15 is replenished in the storage device 100, the reading result of the barcode reader 24 is notified from the storage device 100 to the storage furniture 200, and the reading result may be stored in the storage unit 87 of the storage furniture 200. That is, the storage device 100 detects that the product aggregate 15 is replenished (to be replenished), and notifies the storage furniture 200. Further, the storage furniture 200 stores the notified information and the date and time from the timer of the storage furniture in the storage unit 87. Therefore, the storage device 100 may not include the storage unit 86. Thus, the replenishment timing storage unit which stores the timing when the product aggregate 15 is replenished in the storage device 100 in association with the type of the product aggregate 15 may be provided not in the storage device 100 but in the storage furniture 200.

Further, in order to facilitate the work of replenishing the storage device 100 with the product aggregate 15, in a case where the storage device 100 is replenished with a plurality of product aggregates 15 of the same type at a time, it is preferable that the input area notification control unit preferentially notifies a plurality of storage areas 21 adjacent to each other or located near each other.

For example, in a case where a plurality of storage areas 21 in the same drawer shelf 13 are empty, or a case where a plurality of continuous storage areas 21 in the same drawer shelf 13 are empty, the plurality of storage areas 21 are notified in a manner different from the storage areas 21 of other empty areas (for example, instead of simply turning on the in-shelf position notification LED 25, blinking or emitting light in another color).

As described above, the storage device 100 includes the input unit 84 which receives an input of the quantity of the product aggregates 15 replenished in the storage device 100. Then, the input area notification control unit notifies the storage area 21 where the product aggregate 15 needs to be placed according to the quantity input to the input unit 84.

However, the present invention is not limited to this example, and the storage device 100 may have a configuration in which the storage device 100 does not receive the input of the quantity of the product aggregates 15 to be replenished into the storage device 100. Instead, when the barcode is read by the barcode reader 24 to input the product information of the replenished product aggregate 15, the storage device 100 may notifies the location of the empty storage area 21 matching the shape of the product aggregate 15.

Here, an example of the operation in a case where the inventory quantity of the products 31 in the storage furniture 200 is less than the purchase number when the purchaser purchases the products 31 as described above will be described.

As described above, the storage furniture 200 manages the inventory quantity of the products 31 accommodated in the storage furniture 200 for each type of the products 31. Further, the storage device 100 also manages the inventory quantity of the products 31 accommodated in the storage device 100 for each type of the products 31.

For example, the control unit 48 of the storage device 100 notifies the control unit 52 of the storage furniture 200 of the information indicating the inventory quantity of each product 31 in the storage device 100, and the control unit 52 also manages the information of the inventory quantity of each product 31 in the storage device 100. Alternatively, conversely, the control unit 52 of the storage furniture 200 notifies the control unit 48 of the storage device 100 of the information indicating the inventory quantity of each product 31 in the storage furniture 200, and the control unit 48 also manages the information of the inventory quantity of each product 31 in the storage furniture 200.

Further, the control unit 48 or the control unit 52 manages a total inventory quantity which is the total number of the inventory quantity in the storage furniture 200 and the inventory quantity in the storage device 100 for each type of the product 31.

Then, the control unit 48 or the control unit 52 determines whether or not the purchase number is more than the inventory quantity in the storage furniture 200, and if so, determines whether or not the purchase number is equal to or less than the total inventory quantity. In a case where the purchase number is equal to or less than the total inventory quantity, the control unit 48 or the control unit 52 performs a control to notify that fact.

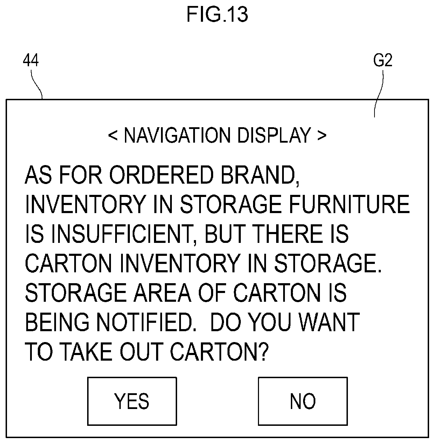

For example, the control unit 52 causes the storage device 100 to output the notification command signal corresponding to the product 31 which the purchaser wants to purchase, while causing the display device 44 to display a navigation screen G2 as illustrated in Fig. 13. That is, for example, the display device 44 performs display notification "As for ordered brand, the inventory in the storage furniture is insufficient, but there is a carton inventory in the storage. The storage area of the carton is being notified. Do you want to take out the carton?"

Further, when the operator performs a touch operation on the display location of "Yes" on the navigation screen G2 in Fig. 13, the navigation screen G2 is deleted.

The operator who checks the navigation screen G2 can recognize that a purchase number of products 31 can be sold to the purchaser by taking out the product aggregate 15 from the storage device 100. Thus, the operator can take out the product aggregate 15 from the storage device 100, peel off the packaging of the product aggregate 15, and sell the purchase number of products 31.

When the product aggregate 15 is taken out of the storage device 100, the control unit 48 of the storage device 100 recognizes that fact and updates the inventory quantities of the product aggregates 15 and the products 31 in the storage device 100. Further, since the control unit 52 and the control unit 48 cooperate with each other, the control unit 52 also updates the inventory quantities of the product aggregate 15 and the product 31 in the storage device 100.

Further, when the operator performs a touch operation on the display location of "No" with respect to the navigation screen G2 of Fig. 13, the navigation screen G2 is deleted, the control unit 52 outputs a stop command of the notification command signal to the control unit 48, and the control unit 48 performs a process of stopping the notification command signal, that is, a process of turning off the drawer shelf notification LED 18 and the in-shelf position notification LED 25.

As described above, the product dispensing system 300 is a product dispensing system 300 including the storage device 100 and the storage furniture 200. The product dispensing system 300 includes an in-furniture inventory quantity management unit which manages an in-furniture inventory quantity which is an inventory quantity in the storage furniture 200 for each type of the product 31, a total inventory quantity management unit which manages a total inventory quantity which is a total number of the inventory quantity in the storage furniture 200 and the inventory quantity in the storage device 100 for each type of product 31, a dispensing required number determination unit which determines whether or not a product dispensing required number (purchase number) which is the number of products 31 required to be dispensed in response to a product dispensing require for requiring to dispense the product 31 from the storage furniture 200 is greater than the in-furniture inventory quantity and determines whether or not the product dispensing required number is equal to or less than the total inventory quantity, and a total inventory quantity notification control unit which, when the product dispensing required number is greater than the in-furniture inventory quantity and is equal to or less than the total inventory quantity, performs a control to notify that fact.

Further, when the total inventory quantity managed by the total inventory quantity management unit is compared with the inventory quantity on the book (hereinafter, the book inventory quantity: for example, managed by a computer installed in a store) calculated on the basis of the number of the products 31 sold in the store and the number of the products delivered to the store, the difference can be instantaneously recognized at an arbitrary time, and thus it is possible to grasp the time zone when the difference in inventory quantity occurred. Therefore, an inventory abnormality can be detected without performing inventorying.

Examples of a case where the inventory abnormality is detected include (1) a case where the number of dispensed products and the number of sold products are different, (2) a case where the number of products delivered to the store is different from the number of products warehoused to the product dispensing system 300, and (3) a case where the operator directly extracts the product 31 from the storage furniture 200 and does not enter the extraction in the book (due to the collapse of the product 31 or the like).

Incidentally, it is satisfied that "the number of delivered products - the number of sold products" = "the book inventory quantity". Further, for example, it is satisfied that "book inventory quantity" ≤ "total inventory quantity managed by the total inventory quantity management unit".

As described above, the inventory abnormality can be detected on the basis of the difference between the total inventory quantity managed by the total inventory quantity management unit of the product dispensing system 300 and the inventory quantity on the book.

Further, the product dispensing system 300 may include an inventory abnormality detection unit which can be detect an inventory abnormality on the basis of the difference between the total inventory quantity managed by the total inventory quantity management unit and the inventory quantity on the book. Further, in a case where the inventory abnormality detection unit detects an inventory abnormality, the product dispensing system 300 may be configured to notify (display notification, audio notification, and the like) to that fact.

Further, in the product dispensing system 300, not only the product 31 in a loose state but also the product aggregate 15 can be sold.

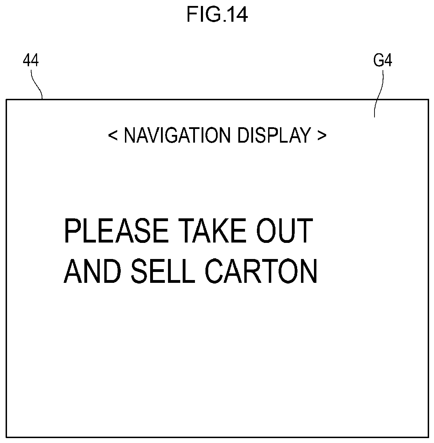

For example, the dispensing command acquisition unit 56 can receives an operation of requesting sale (sale of the product aggregate 15) in a carton. In a case where the dispensing command acquisition unit 56 receives the operation of requesting sale in a carton, the notification command signal corresponding to the product aggregate 15 which the purchaser wants to purchase is output the storage device 100, while a navigation screen G4 as illustrated in Fig. 14 is displayed in the display device 44. That is, for example, a display notification "Please take out and sell the carton" is performed on the display device 44.

Further, in a case where the product dispensing system 300 receives an operation of requesting sale in a carton, there may be no carton inventory in the storage device 100. Preferably, in a case where there is no carton inventory in the storage device 100, it is determined whether or not the inventory quantity in the storage device 100 is ten or more, and in a case where the inventory quantity is ten or more, the fact is notified.

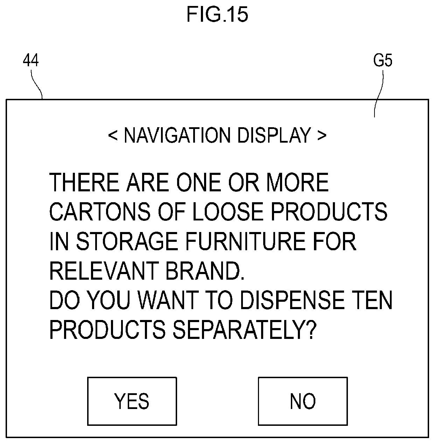

For example, as illustrated in a navigation screen G5 illustrated in Fig. 15, the display device 44 performs display notification "There are one or more cartons of loose products in the storage furniture for the relevant brand. Do you want to dispense ten products separately?"

In addition, when the operator performs a touch operation on the display location of "Yes" on the navigation screen G5 in Fig. 15, the navigation screen G5 is deleted, and ten relevant products 31 are dispensed from the storage furniture 200.

On the other hand, when the operator performs a touch operation on the display location of "No", the navigation screen G5 is deleted, and the product 31 is not dispensed from the storage furniture 200.

Here, the process of dispensing the ten products 31 from the storage furniture 200 may be a process of sequentially dispensing ten products 31 from one or a plurality of magazines 29 or a process of delivering the magazine 29 by the moving unit 33 to the input magazine installation unit. In the latter case, the operator can sell the product 31 by taking out the magazine 29 delivered to the input magazine installation unit and further taking out the product 31 from the magazine 29. More specifically, for example, the product dispensing system 300 determines whether or not ten or more products 31 are in stock in one magazine 29. In a case where ten or more products are in stock, the product dispensing system performs a process of delivering the magazine 29 to the input magazine installation unit, and in a case where ten or more products are not in stock, the product dispensing system performs a process of sequentially dispensing the products 31 from the magazine 29.

As described above, the product dispensing system 300 is a product dispensing system 300 including the storage device 100 and the storage furniture 200. The product dispensing system 300 includes an in-furniture inventory quantity management unit which manages an in-furniture inventory quantity which is an inventory quantity in the storage furniture 200 for each type of the product 31, an in-furniture inventory determination unit which determines whether or not the in-furniture inventory quantity is equal to or more than a package number (for example, ten) which is the number of the products 31 in one product aggregate 15 when receiving an aggregate dispensing request for requesting to dispense the product aggregate 15 from the storage device 100, and an in-furniture inventory quantity notification control unit which, when the in-furniture inventory quantity is equal to or more than the package number, performs a control to notify that fact.

The product dispensing system 300 may be capable of displaying the total inventory quantity managed by the total inventory quantity management unit on the display device 44 or outputting sound from a speaker (not shown in the drawings).

That is, the product dispensing system 300 includes a total inventory quantity management unit which manages a total inventory quantity which is the total number of the inventory quantity in the storage furniture 200 and the inventory quantity in the storage device 100 for each type of the product 31, and a total inventory quantity notification control unit (for example, the control unit 52) which performs a control to notify the total inventory quantity.

Thereby, the operator or the customer of the store can recognize the maximum number of the same type of products 31 that can be sold (purchased), that is, the maximum sales number (maximum purchase number).

### Second Embodiment

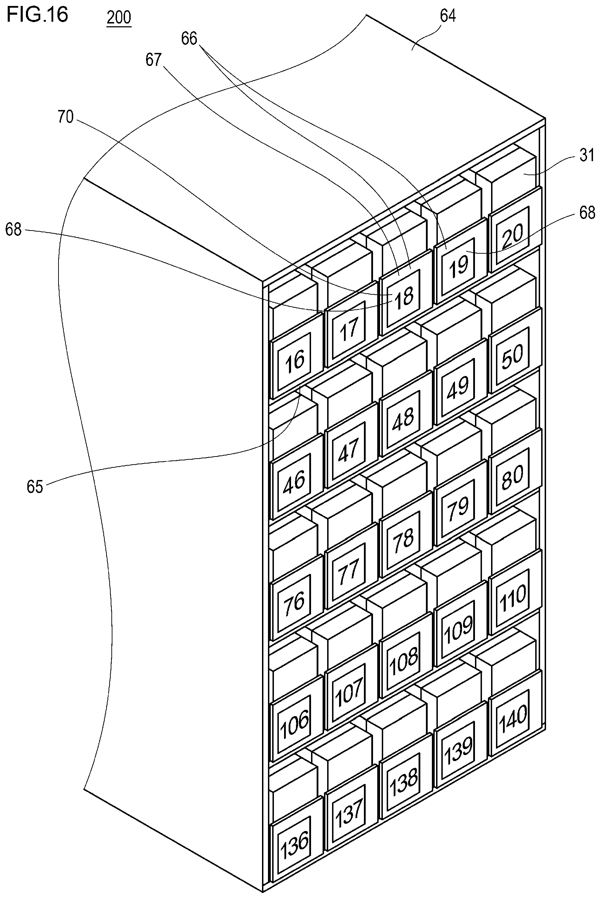

Next, a second embodiment will be described with reference to Figs. 16 to 18.

As described below, the product dispensing system (overall illustration not shown) according to this embodiment is configured to be different from the above-described first embodiment in the configuration of the storage furniture 200 and similar to the above-described first embodiment in other aspects.

As illustrated in Fig. 16, in the case of this embodiment, the storage furniture 200 includes, for example, a plurality of stages of shelf plates 65, and a plurality of magazines 66 can be mounted side by side on each of the shelf plates 65. The storage furniture 200 includes, for example, a rectangular parallelepiped box-shaped shelf frame 64 open forward, and the plurality of stages of shelf plates 65 are provided on the shelf frame 64.

Also in the case of this embodiment, the same brand of products 31 are accommodated in one magazine 66, and the products 31 of mutually different brands are accommodated in respective magazines 66. However, a plurality of magazines 66 accommodating the products 31 of the same brand may be provided.

When the products 31 are sold, in a state where the magazine 66 is mounted on the shelf plate 65, the operator such as a clerk can extract and take out the product 31 from the front end of each magazine 66.

Incidentally, each magazine 66 can be taken out from the shelf plate 65 forward, so that the magazine 66 can be replenished with the products 31 in a state where the magazine 66 is taken out from the shelf plate 65.

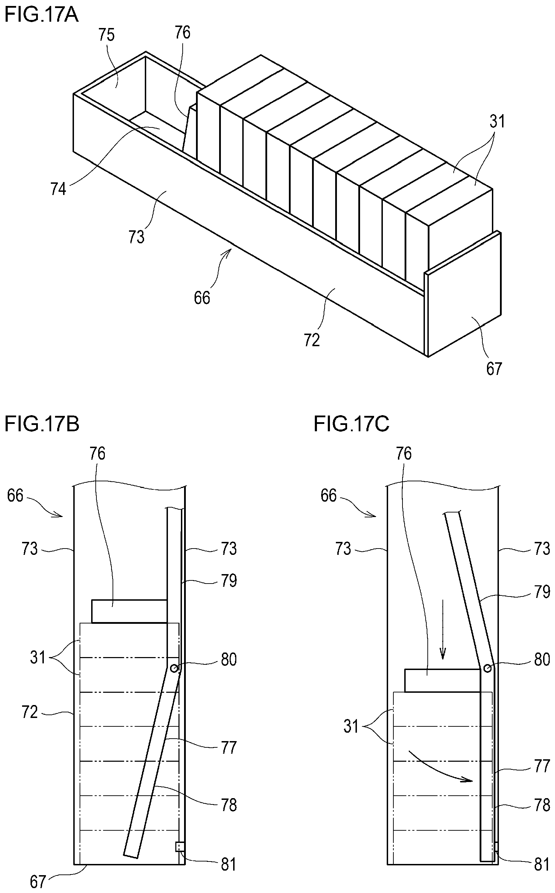

As illustrated in Fig. 17A, the magazine 66 includes a mounting unit 72 on which the products 31 can be mounted back and forth in a row. For example, the mounting unit 72 includes a front wall 67, a pair of right and left side walls 73, a bottom plate portion 74, and a rear wall 75. Incidentally, the front wall 67 may be fixed to the front ends of the side walls 73 and the bottom plate portion 74, or may be held by the front ends of the pair of side walls 73 in a state where the front wall can be tilted forward.

Further, the magazine 66 includes a pressing slider 76 which is provided so as to be movable forward and backward along the mounting unit 72. The pressing slider 76 urges the product 31 mounted on the mounting unit 72 forward. As the number of remaining products 31 on the mounting unit 72 decreases, the pressing slider 76 moves forward.

As illustrated in Figs. 17B and 17C, the magazine 66 includes a swing member 77 provided on the mounting unit 72 so as to be able to swing with respect to the mounting unit 72. The swing member 77 includes, for example, a front portion 78 and a rear portion 79, each of which extends linearly. The swing member 77 is formed in a bent shape which is bent at the boundary between the front portion 78 and the rear portion 79.

The swing member 77 is pivotally supported by a shaft support 80 on the bottom plate portion 74 of the mounting unit 72 at the boundary between the front portion 78 and the rear portion 79.

The swing member 77 swings with respect to the mounting unit 72 by being pushed by the pressing slider 76 in accordance with the position of the pressing slider 76 in a front-rear direction.

As illustrated in Fig. 17B, when the number of the remaining products 31 in the mounting unit 72 is, for example, six or more, the rear portion 79 is arranged along one side wall 73, and the front portion 78 is separated from the side wall 73 toward the front of the front portion 78.

On the other hand, as illustrated in Fig. 17C, when the number of the remaining products 31 in the mounting unit 72 is, for example, five or less, the front portion 78 is arranged along one side wall 73, and the rear portion 79 is separated from the side wall 73 toward the rear of the rear portion 79.

Incidentally, the swing member 77 also has a function of visually notifying the number of the remaining products 31 in the mounting unit 72, for example, according to the position of the front end of the front portion 78.

For example, the front wall 67 includes a shielding portion (not shown in the drawings) that covers the front end of the front portion 78 so that the front end of the front portion 78 is not visible from the front of the magazine 66 in the state of Fig. 17B.

On the other hand, in the state of Fig. 17C, the front end of the front portion 78 can be visually recognized from the front of the magazine 66.

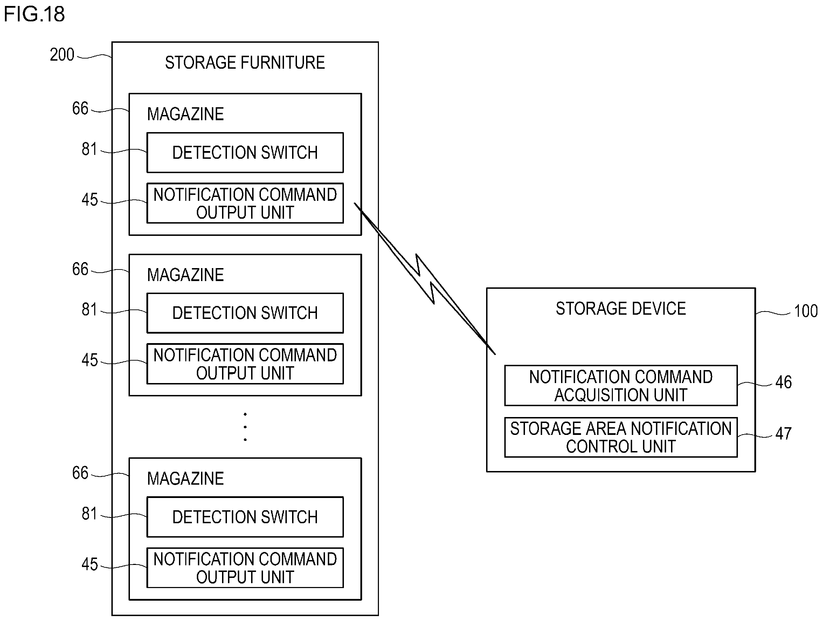

Further, the magazine 66 includes a detection switch 81 which detects that the number of the remaining products 31 in the mounting unit 72 is, for example, five or less, and the notification command output unit 45 (Fig. 18).

The detection switch 81 is provided on, for example, the side wall 73 or the bottom plate portion 74.

The detection switch 81 detects, for example, that the number of the remaining products 31 in the mounting unit 72 is, for example, five or less by being pressed by the front end of the front portion 78.

In the case of this embodiment, the notification command output unit 45 outputs the notification command signal to the storage device 100 in a case where the detection switch 81 detects that the number of the remaining products 31 in the mounting unit 72 is, for example, five or less.

Also in the case of this embodiment, when acquiring the notification command signal from the notification command output unit 45, the notification command acquisition unit 46 of the storage device 100 notifies the acquired notification command signal to the storage area notification control unit 47, and the storage area notification control unit 47 notifies the position of the storage area 21 of the product aggregate 15 corresponding to the notification command signal.

As described above, the product dispensing system 300 according to this embodiment is the product dispensing system 300 including the storage device 100 and the storage furniture 200. The storage furniture 200 includes the plurality of magazines 66 and a support body (shelf plate 65) which supports the plurality of magazines 66. The magazine 66 includes the mounting unit 72 in which a plurality of products 31 can be mounted removably in a row in the front-rear direction, the pressing slider 76 which is provided to be movable forward and backward along the mounting unit 72 and urges the product 31 mounted on the mounting unit 72 forward, and the output unit (notification command output unit 45) which outputs the notification command signal to the storage device 100 according to the position of the pressing slider 76 in the front-rear direction. The storage area notification control unit 47 of the storage device 100 notifies the storage area 21 of the replenishment-required product aggregate in response to the notification command signal from the output unit.

Therefore, also in the case of this embodiment, when the notification command signal is transmitted from the storage furniture 200 according to the inventory status of the product 31 in the storage furniture 200, the storage area notification control unit 47 performs a control to notify the storage area 21 of the replenishment-required product aggregate corresponding to the notification command signal.

### Third Embodiment

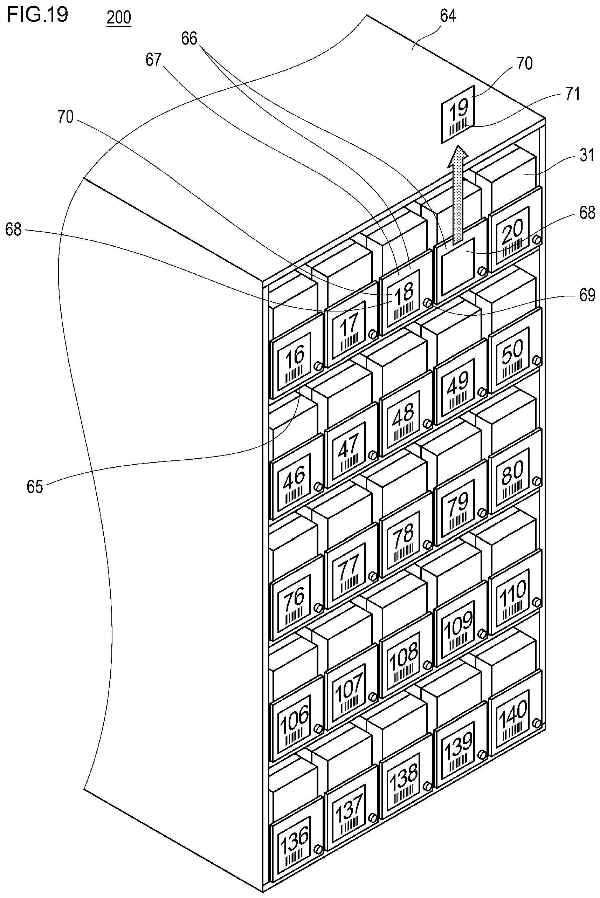

Next, a third embodiment will be described with reference to Fig. 19.

As described below, the product dispensing system (overall illustration not shown) according to this embodiment is configured to be different from the above-described second embodiment in the configuration of the storage furniture 200 and similar to the above-described second embodiment in other aspects.

In the case of this embodiment, the magazine 66 includes an operation button 69 provided on the front side of the front wall 67.

Further, in the case of this embodiment, the detection switch 81 (Fig. 18) does not detect pressed by the front portion 78 of the swing member 77, but detects a pressing operation on the operation button 69.

In a case where the operator such as a clerk recognizes that the number of the remaining products 31 in the mounting unit 72 of each magazine 66 has decreased, the detection switch 81 detects that fact by pressing the operation button 69. The notification command output unit 45 outputs the notification command signal to the storage device 100.

### Fourth Embodiment

Next, a fourth embodiment will be described with reference to Fig. 19.

In the case of this embodiment, a barcode 71 of the product 31 mounted on the magazine 66 is attached to the information display card 70 held by the card holder 68 provided on the front side of the front wall 67 of the magazine 66.

Incidentally, in the case of this embodiment, the magazine 66 may not include the operation button 69 and the detection switch 81.

In the case of this embodiment, in a case where an operator such as a clerk recognizes that the number of the remaining products 31 in the mounting unit 72 of each magazine 66 has decreased, the operator such as a clerk operator extracts the information display card 70 from the card holder 68 and causes the barcode reader, which is auxiliary equipment of the storage furniture 200 to read the barcode 71, so that the notification command signal is output from the storage furniture 200 to the storage device 100.

### <Modification of partition of drawer shelf>

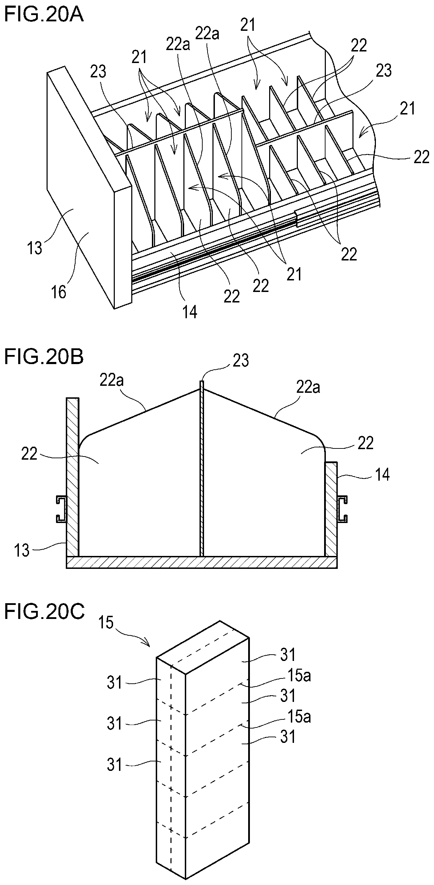

Next, a modification of the partition 22 of the drawer shelf 13 will be described with reference to Figs. 20A and 20B.

As illustrated in Fig. 20A, the drawer shelf 13 has a plurality of partitions 22, and the plurality of storage areas 21 of the drawer shelf 13 are horizontally partitioned by the partition 22. The partition 22 is a partition plate, and the plate surface thereof is arranged vertically. More specifically, the plate surface of the partition 22 faces in the front-rear direction, and the partition 22 mutually partitions the storage areas 21 arranged adjacent to each other in front and rear.

The plurality of partitions 22 arranged at the front of the drawer shelf 13 have a larger height dimension than the plurality of partitions 22 arranged at the rear of the drawer shelf 13.

The partition 23 arranged at the front of the drawer shelf 13 has a larger height dimension than the partition 23 disposed at the rear of the drawer shelf 13. These partitions 23 are arranged at the center of the drawer shelf 13 in the lateral width direction, and the plate surface faces left and right.

The plurality of partitions 22 are arranged on each of the right and left sides of the partition 23 arranged at the front of the drawer shelf 13, and the upper edges 22a of the partitions 22 are inclined. For example, the upper edge 22a of the left partition 22 is inclined downward to the left side, and the upper edge 22a of the right partition 22 is inclined downward to the right side.

On the other hand, the plurality of partitions 22 are also arranged on each of the left and right sides of the partition 23 arranged at the rear of the drawer shelf 13, but the upper edges of the partitions 22 are horizontal.

In this way, the shelf (for example, the drawer shelf 13) includes a partition (partition 22) which partitions the storage areas 21 of the product aggregate 15 from each other in the horizontal direction, and the upper edge 22a of the partition plate is inclined.

Here, as illustrated in Fig. 20C, for example, the plurality of products 31 of a rectangular parallelepiped shape are packaged together by a packaging film to be integrated into the product aggregate 15. In a case where the product aggregate 15 includes ten products 31, for example, the products 31 are packaged in a state of being arranged in two rows (two rows of five) as illustrated in Fig. 20C. Incidentally, the boundary 15a between the products 31 which are adjacent to each other in a row direction (the vertical direction in Fig. 20C) of the products 31 included in the product aggregate 15 is planar.

The drawer shelf 13 can accommodate such a product aggregate 15 in a vertical position.

Since the upper edge 22a of the partition 22 is inclined as described above, it is possible to suppress that when the operator takes out the product aggregate 15 from the drawer shelf 13, the upper edge 22a abuts along the boundary 15a of the product aggregate 15. Therefore, it is possible to suppress that the product aggregate 15 is broken (the product aggregate 15 is broken at the boundary 15a) .

Incidentally, the inclination angles of the upper edges 22a may be equal to each other in the left and right partitions 22, or may be different from each other. Further, the entire upper edge 22a may be inclined, or only a part of the upper edge 22a may be inclined. In a case where the upper edge 22a has a horizontal portion, the horizontal width dimension of the horizontal portion is preferably shorter than the horizontal width of the product aggregate 15. Further, the horizontal width dimension of the inclined portion of the upper edge 22a is preferably equal to or more than the horizontal width dimension of the product aggregate 15.

In Figs. 15A and 15B, an example is described in which the drawer shelf 13 is provided with the partition 22 having the inclined upper edge 22a in a case where the storage areas 21 are formed in two rows on the drawer shelf 13, but the present invention is not limited to this example. Also in a case where the storage areas 21 are formed in the drawer shelf 13 in three or more rows, or the storage areas 21 are formed in the drawer shelf 13 in one or more rows, the drawer shelf 13 may be provided with the partition 22 having the inclined upper edge 22a.

Further, in Figs. 20A and 20B, an example is described in which the upper edge 22a is inclined downward in one direction, but the upper edge 22a may be formed in an arch shape. That is, the upper edge 22a may be high at the center in the lateral width direction and may be inclined downward in the right and left direction.

### Fifth Embodiment

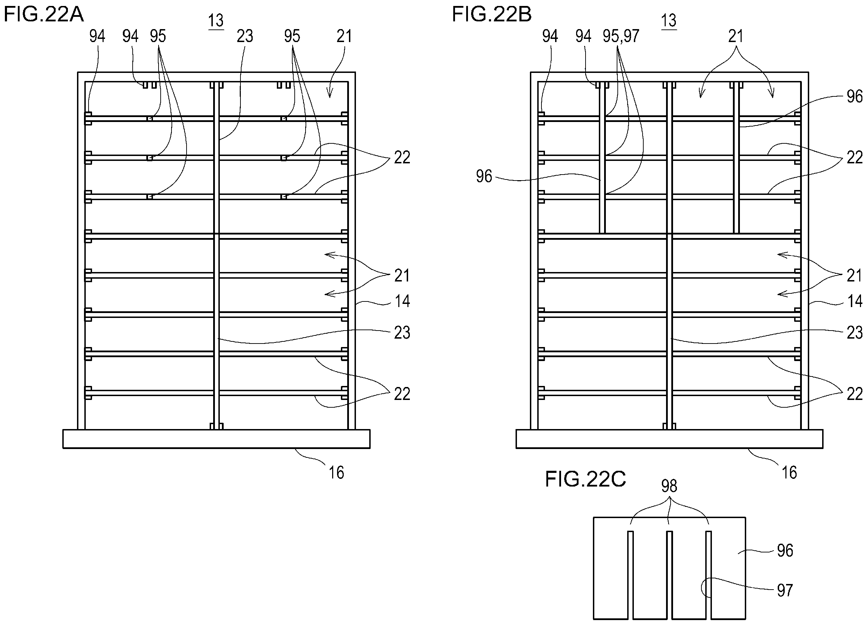

Next, a fifth embodiment will be described with reference to Figs. 22A and 22B.

In the storage device according to this embodiment (overall illustration not shown), the structure of the drawer shelf 13 of the storage is different from that in the modification described with reference to Figs. 20A and 20B in the following aspects. In other aspects, the drawer shelf 13 is configured to be similar to the modification described with reference to Figs. 20A and 20B.

Further, the storage device according to this embodiment is configured to be similar to the storage device 100 according to the above-described first embodiment except for the drawer shelf 13.

In the case of this embodiment, a partition 96 (partition plate) can be additionally installed on the drawer shelf 13. As illustrated in Fig. 22B, by additionally detachably installing the partition 96, the layout (the size and number of storage areas 21) of the storage area 21 in the drawer shelf 13 can be changed compared with the state (Fig. 22A) before the partition 96 is installed.

Therefore, the storage device can be used by customizing the layout of the storage area 21 in the drawer shelf 13 in accordance with the handling status of the brand, the inventory quantity, the inventory ratio of each type of carton, and the like. Therefore, for example, it is possible to easily customize and use the storage device for each store. Further, a carton having a special shape can be accommodated in the storage area 21 with excellent quality.

As illustrated in Fig. 22A, for example, slits 95 open upward are formed in three rows of partitions 22 arranged at the back of the drawer shelf 13.

On the other hand, as illustrated in Fig. 22C, slits 97 opened downward are formed in the partition 96 additionally installed.

In order to additionally install the partition 96, as illustrated in Fig. 22B, the partition 96 is inserted from above to intersect with three rows of the partitions 22 arranged in the back of the drawer shelf 13. That is, each partition 22 is inserted into each slit 97 of the partition 96, and a portion 98 above each slit 97 in the partition 96 is inserted into the slit 95 of each partition 22, whereby the partition 96 is installed.

In this way, the initial storage area 21 (Fig. 22A) can be divided by the partition 96 into a plurality of storage areas 21 having a smaller plane area.

As described above, in the case of this embodiment, the partition 96 (partition plate) can be detachably mounted on the drawer shelf 13 (shelf) of the storage, and by additionally installing the partition 96, the existing storage area 21 can be divided into a plurality of areas.

Incidentally, the original state (the state illustrated in Fig. 22A) can be easily restored by detaching the partition 96 from the partition 22.

Incidentally, the drawer shelf 13 preferably includes positioning units 94 for positioning the partitions 22 and 23 by inserting and fixing both ends of the partitions 22 and 23 thereinto and positioning units 94 for positioning the partitions 96 by inserting and fixing one ends of the partitions 96 thereinto.

### Sixth Embodiment

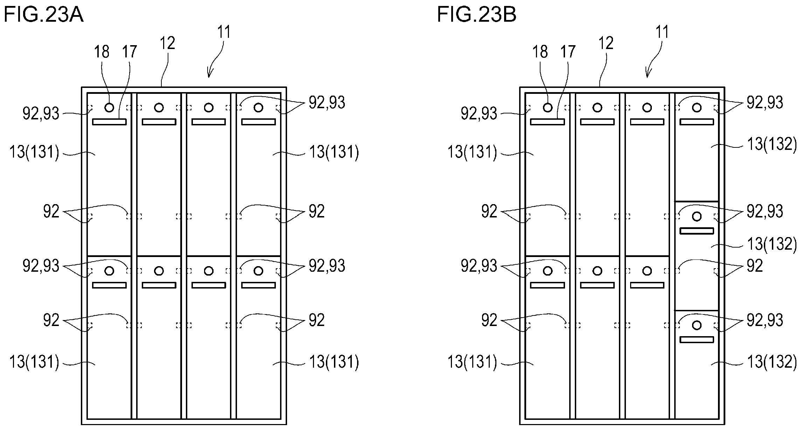

Next, a sixth embodiment will be described with reference to Figs. 23A and 23B.

In the storage device according to this embodiment (overall illustration not shown), the structure of the storage 11 is different from that of the storage device 100 according to the first embodiment in the following aspects. In other aspects, the storage device is configured to be similar to the storage device 100 according to the first embodiment.

In the case of this embodiment, the drawer shelves 13 (shelves) having a plurality of height dimensions can be selectively attached to the frame body 12 of the storage 11.

The drawer shelf 13 includes a pair of right and left guided portions 93 which are detachably connected to a pair of guide rails 92 provided on the frame body 12 respectively and are linearly guided forward and backward by the guide rails 92.

When the guide rail 92 and the guided portion 93 are in a connected state, a linear guide mechanism is configured by the guide rail 92 and the guided portion 93.

As illustrated in Figs. 23A and 23B, for example, the drawer shelf 13 can be attached to the storage 11 in a plurality of rows (for example, four rows). Fig. 23A illustrates a state in which two stages of drawer shelves 13 are attached to each row. On the other hand, Fig. 23B illustrates a state where three stages of drawer shelves 13 are vertically attached in the rightmost row.

Here, the drawer shelves 13 vertically installed in two stages are referred to as drawer shelves 131, and the drawer shelves 13 vertically installed in three stages are referred to as drawer shelves 132 (Fig. 23B). The vertical dimension of the drawer shelf 131 is approximately a half of the vertical dimension of the storage 11, and the vertical dimension of the drawer shelf 132 is approximately one third of the vertical dimension of the storage 11.

In each of drawer shelves 131 and 132, a pair of right and left guided portions 93 extending in the front-rear direction are provided in the upper portion of each of the drawer shelves 131 and 132.

Each row of the frame body 12 is provided with the guide rails 92 which guide the guided portions 93 of two vertical stages of drawer shelves 131 when the drawer shelf 131 is attached (the guide rail 92 of which the reference sign indicates the same position as the guided portion 93 in Fig. 23A) and the guide rails 92 which guide the guided portions 93 of three vertical stages of drawer shelves 132 when the drawer shelf 132 is attached (the guide rail 92 of which the reference sign indicates the same position as the guided portion 93 in Fig. 23B).

In the case of this embodiment, for example, the guide rail 92 which guides the guided portion 93 of the drawer shelf 131 attached to the upper stage of the frame body 12 is the same as the guide rail 92 which guides the guided portion 93 of the drawer shelf 132 attached to the uppermost stage of the frame body 12.

When the drawer shelf 131 is attached to the frame body 12 (Fig. 22A) and when the drawer shelf 132 is attached to the frame body 12 (Fig. 22B), the drawer shelves 13 having different height dimensions can be installed on the frame body 12 by selecting the guide rail 92 to be connected to the guided portion 93 of the drawer shelf 13.

In the case of this embodiment, each row of the frame body 12 is provided with a plurality of (for example, four) guide rails 92 arranged at different height positions. That is, each row of the frame body 12 is provided with a total of eight (four stages × two (a pair of right and left)) guide rails 92.

By connecting the pair of guided portions 93 of the drawer shelf 13 to the pair of selected guide rails 92 of the frame body 12, respectively, the drawer shelf 13 can be attached to the frame body 12.

By detaching the pair of guided portions 93 of the drawer shelf 13 from the pair of guide rails 92 of the frame body 12, the drawer shelf 13 can be detached from the frame body 12.

In the case of this embodiment, in both the state of Fig. 23A and the state of Fig. 23B, the storage 11 includes the guide rails 92 in the state of not being connected to the guided portion 93 of the drawer shelf 13 (hereinafter, referred to as an empty state)

In the state of Fig. 23A, the guide rail 92 in the empty state is arranged at a different height position from the guide rail 92 in the state of being connected to the guided portion 93 of the drawer shelf 13 (hereinafter referred to as a use state).

In the state of Fig. 23B, in a specific row (for example, the rightmost row), the guide rail 92 in the empty state is arranged at the same height as the guide rail 92 in the use state in another row, and the guide rail 92 in the use state is arranged at the same height as the guide rail 92 in the empty state in another row.

In the case of this embodiment, the height dimension of the drawer shelf 13 to be used can be changed in accordance with the handling status of the brand, the inventory quantity, the inventory ratio of each shape of carton, and the like. Therefore, for example, it is possible to easily customize and use the storage device for each store.

Hereinbefore, the embodiment has been described with reference to the drawings. However, this is an exemplification of the present invention, and various configurations other than those described above can be adopted.

Incidentally, each kind of component of the present invention does not have to be independent. For example, one component may be a part of another component, and a part of a certain component may overlap with another component.

This embodiment includes the following technical concept.
(1) A storage device which is signal-connected to storage furniture which accommodates a plurality of types of products in a dispensable manner and stores a product aggregate in which a plurality of products of a same type are packaged together, the device including:
   a storage which is capable of accommodating a plurality of the product aggregates; and
   a storage area notification control unit which performs a control to notify a storage area in the storage storing a replenishment-required product aggregate which is the product aggregate corresponding to a product of a type specified by a notification command signal transmitted from the storage furniture.
(2) The storage device according to (1), wherein
   in a case where the notification command signal is transmitted from the storage furniture according to an inventory status of the product in the storage furniture, the storage area notification control unit performs a control to notify a storage area of the replenishment-required product aggregate corresponding to the notification command signal.
(3) The storage device according to (1) or (2), wherein
   the storage includes a plurality of shelves each capable of holding a plurality of the product aggregates, and
   the storage area notification control unit includes
   a shelf notification control unit which performs a control to notify a shelf holding a replenishment-required product aggregate, and
   a holding location notification control unit which performs a control to notify a location where the replenishment-required product aggregate is held in the shelf.
(4) The storage device according to (3), wherein
   the storage includes a frame body which accommodates the shelf in a drawable manner, and
   a notification of the shelf notification control unit is performed in a manner recognizable from an outside of the storage device in a state where the shelf is accommodated in the frame body.
(5) The storage device according to (4), wherein
   a notification by the holding location notification control unit is performed in a manner recognizable in a state where at least the shelf is drawn from the frame body.
(6) The storage device according to (4) or (5), wherein
   the shelf includes
   a first display body which is arranged at a portion exposed to an outside in a state where the shelf is accommodated in the frame body, and
   a second display body which notifies the individual storage areas so as to be able to be specified,
   the shelf notification control unit performs notification by changing a display state of the first display body, and
   the holding location notification control unit performs notification by changing a display state of the second display body.
(7) The storage device according to any one of (3) to (6), wherein
   the shelf includes a partition plate which partitions the storage areas of the product aggregate from each other in a horizontal direction, and
   an upper edge of the partition is inclined.
(8) The storage device according to any one of (1) to (7), wherein
   in a case where a plurality of the product aggregates of a same type are stored in the storage, the storage area notification control unit preferentially notifies the storage area of the product aggregate with an earliest expiration date or timing of being put into the storage among the plurality of product aggregates.
(9) A product dispensing system including:
   the storage device according to any one of (1) to (8) ;
   the storage furniture;
   an in-furniture inventory quantity management unit which manages an in-furniture inventory quantity which is an inventory quantity in the storage furniture for each type of a product;
   a total inventory quantity management unit which manages a total inventory quantity which is a total number of an inventory quantity in the storage furniture and an inventory quantity in the storage device for each type of product;
   a dispensing required number determination unit which determines whether or not a product dispensing required number which is the number of products required to be dispensed in response to a product dispensing require for requiring to dispense the product from the storage furniture is greater than the in-furniture inventory quantity and determines whether or not the product dispensing required number is equal to or less than the total inventory quantity; and
   a total inventory quantity notification control unit which, when the product dispensing required number is greater than the in-furniture inventory quantity and is equal to or less than the total inventory quantity, performs a control to notify that fact.
(10) A product dispensing system including:
   the storage device according to any one of (1) to (8) ;
   the storage furniture;
   a total inventory quantity management unit which manages a total inventory quantity which is a total number of an inventory quantity in the storage furniture and an inventory quantity in the storage device for each type of product; and
   a total inventory quantity notification control unit which performs a control to notify the total inventory quantity.
(11) A product dispensing system comprising:
   the storage device according to any one of (1) to (8) ;
   the storage furniture;
   an in-furniture inventory quantity management unit which manages an in-furniture inventory quantity which is an inventory quantity in the storage furniture for each type of product;
   an in-furniture inventory determination unit which determines whether or not the in-furniture inventory quantity is equal to or more than a package number which is the number of the products in one product aggregate when receiving an aggregate dispensing request for requesting to dispense the product aggregate from the storage device; and
   an in-furniture inventory quantity notification control unit which, when the in-furniture inventory quantity is equal to or more than the package number, performs control to notify that fact.
(12) A product dispensing system including:
   the storage device according to any one of (1) to (8); and
   the storage furniture, wherein
   the storage furniture includes a plurality of magazines and a support body which supports the plurality of magazines, and
   the magazine includes
   a mounting unit in which a plurality of products are removably mountable in a row in a front-rear direction,
   a pressing slider which is provided to be movable forward and backward along the mounting unit and urges the product mounted on the mounting unit forward, and
   an output unit which outputs a notification command signal to the storage device according to a position of the pressing slider in the front-rear direction, and
   the storage area notification control unit of the storage device notifies the storage area of the replenishment-required product aggregate in response to the notification command signal from the output unit.
(13) The product dispensing system according to any one of (9) to (12), further including:
   an input area notification control unit which performs a control to notify the storage area where the product aggregate needs to be placed when the product aggregate is replenished in the storage device; and
   a replenishment timing storage unit which stores a timing when the product aggregate is replenished in the storage device in association with a type of the product aggregate.
(14) The product dispensing system according to (13), wherein
   in a case where the storage device is replenished with a plurality of the product aggregates of a same type at a time, the input area notification control unit preferentially notifies a plurality of the storage areas adjacent to each other or located near each other.
(15) The product dispensing system according to (14), further including:
   an input unit which receives an input of a quantity of the product aggregates replenished in the storage device, wherein
   the input area notification control unit notifies the storage area where the product aggregate needs to be placed according to the quantity input to the input unit.
(16) An inventory abnormality detection method including:
   detecting an inventory abnormality on a basis of a difference between the total inventory quantity managed by the total inventory quantity management unit of the product dispensing system according to (9) or (10) and an inventory quantity on a book of a store.

This application claims the priority based on Japanese Patent Application No. 2017-249805 filed on December 26, 2017 and Japanese Patent Application No. 2018-187671 filed on October 2, 2018, the entire content of which is incorporated herein by reference.

### REFERENCE SIGNS LIST

- 11, 11a, 11b: Storage
- 12: Frame body
- 13, 13a, 13b, 131, 132: Drawer shelf (shelf)
- 14: Shelf body
- 15: Product aggregate
- 15a: Boundary
- 16: Front wall portion
- 17: Handle portion
- 18: Drawer shelf notification LED (second display body)
- 19, 20: Side wall
- 21: Storage area
- 22, 23: Partition
- 22a: Upper edge
- 24: Barcode reader
- 25: LED In-shelf position notification LED
- 26: Housing
- 27: Storage shelf
- 28: Shelf plate
- 29: Magazine
- 30: Support base
- 31: Product
- 32: Discharge port
- 33: Moving unit
- 34: Rail
- 35: Movement area
- 36: Takeout position
- 37: Shooter
- 38: Takeout opening
- 39: Main body
- 40: Retractable portion
- 41: Insertion space
- 42: Opening/closing door
- 43: Barcode reader
- 44: Display device
- 45: Notification command output unit
- 46: Notification command acquisition unit
- 47: Storage area notification control unit
- 48: Control unit
- 49: CPU
- 50: ROM
- 51: RAM
- 52: Control unit
- 53: CPU
- 54: ROM
- 55: RAM
- 56: Dispensing command acquisition unit
- 57: Retractable portion drive motor
- 58: X drive motor
- 59: Y drive motor
- 60: LED
- 61: Lock mechanism
- 62: Locking member
- 63: Key insertion unit
- 64: Shelf frame
- 65: Shelf plate
- 66: Magazine
- 67: Front wall
- 68: Card holder
- 69: Operation button
- 70: Information display card
- 71: Barcode
- 72: Mounting unit
- 73: Side wall
- 74: Bottom plate portion
- 75: Rear wall
- 76: Pressing slider
- 77: Swing member
- 78: Front portion
- 79: Rear portion
- 80: Shaft support
- 81: Detection switch
- 82: Detection sensor
- 82a: Main body
- 82b: Lever
- 82c: Sensor
- 82d: Upward protrusion
- 82e: Upper surface
- 82f: Swing axis
- 83: Locking actuator
- 84: Input unit
- 85: Open/close sensor
- 86: Storage unit
- 87: Storage unit
- 91: Bottom plate
- 92: Guide rail
- 93: Guided portion
- 94: Positioning unit
- 95, 97: Slit
- 96: Partition
- 100, 100a, 100b: Storage device
- 200, 200a, 200b: storage furniture
- 300: Product dispensing system

## Claims

1. A storage device which is signal-connected to storage furniture which accommodates a plurality of types of products in a dispensable manner and stores a product aggregate in which a plurality of products of a same type are packaged together, the device comprising:
a storage which is capable of accommodating a plurality of the product aggregates; and
a storage area notification control unit which performs a control to notify a storage area in the storage storing a replenishment-required product aggregate which is the product aggregate corresponding to a product of a type specified by a notification command signal transmitted from the storage furniture.

2. The storage device according to claim 1, wherein
in a case where the notification command signal is transmitted from the storage furniture according to an inventory status of the product in the storage furniture, the storage area notification control unit performs a control to notify a storage area of the replenishment-required product aggregate corresponding to the notification command signal.

3. The storage device according to claim 1 or 2, wherein
the storage includes a plurality of shelves each capable of holding a plurality of the product aggregates, and
the storage area notification control unit includes
a shelf notification control unit which performs a control to notify a shelf holding the replenishment-required product aggregate, and
a holding location notification control unit which performs a control to notify a location where the replenishment-required product aggregate is held in the shelf.

4. The storage device according to claim 3, wherein
the storage includes a frame body which accommodates the shelf in a drawable manner, and
a notification of the shelf notification control unit is performed in a manner recognizable from an outside of the storage device in a state where the shelf is accommodated in the frame body.

5. The storage device according to claim 4, wherein
a notification by the holding location notification control unit is performed in a manner recognizable in a state where at least the shelf is drawn from the frame body.

6. The storage device according to claim 4 or 5, wherein
the shelf includes
a first display body which is arranged at a portion exposed to an outside in a state where the shelf is accommodated in the frame body, and
a second display body which notifies the individual storage areas so as to be able to be specified,
the shelf notification control unit performs notification by changing a display state of the first display body, and
the holding location notification control unit performs notification by changing a display state of the second display body.

7. The storage device according to any one of claims 3 to 6, wherein
the shelf includes a partition plate which partitions the storage areas of the product aggregate from each other in a horizontal direction, and
an upper edge of the partition is inclined.

8. The storage device according to any one of claims 1 to 7, wherein
in a case where a plurality of the product aggregates of a same type are stored in the storage, the storage area notification control unit preferentially notifies the storage area of the product aggregate with an earliest expiration date or timing of being put into the storage among the plurality of product aggregates.

9. A product dispensing system comprising:
the storage device according to any one of claims 1 to 8;
the storage furniture;
an in-furniture inventory quantity management unit which manages an in-furniture inventory quantity which is an inventory quantity in the storage furniture for each type of a product;
a total inventory quantity management unit which manages a total inventory quantity which is a total number of an inventory quantity in the storage furniture and an inventory quantity in the storage device for each type of product;
a dispensing required number determination unit which determines whether or not a product dispensing required number which is the number of products required to be dispensed in response to a product dispensing require for requiring to dispense the product from the storage furniture is greater than the in-furniture inventory quantity and determines whether or not the product dispensing required number is equal to or less than the total inventory quantity; and
a total inventory quantity notification control unit which, when the product dispensing required number is greater than the in-furniture inventory quantity and is equal to or less than the total inventory quantity, performs a control to notify that fact.

10. A product dispensing system comprising:
the storage device according to any one of claims 1 to 8;
the storage furniture;
a total inventory quantity management unit which manages a total inventory quantity which is a total number of an inventory quantity in the storage furniture and an inventory quantity in the storage device for each type of product; and
a total inventory quantity notification control unit which performs a control to notify the total inventory quantity.

11. A product dispensing system comprising:
the storage device according to any one of claims 1 to 8;
the storage furniture;
an in-furniture inventory quantity management unit which manages an in-furniture inventory quantity which is an inventory quantity in the storage furniture for each type of product;
an in-furniture inventory determination unit which determines whether or not the in-furniture inventory quantity is equal to or more than a package number which is the number of the products in one product aggregate when receiving an aggregate dispensing request for requesting to dispense the product aggregate from the storage device; and
an in-furniture inventory quantity notification control unit which, when the in-furniture inventory quantity is equal to or more than the package number, performs control to notify that fact.

12. A product dispensing system comprising:
the storage device according to any one of claims 1 to 8; and
the storage furniture, wherein
the storage furniture includes a plurality of magazines and a support body which supports the plurality of magazines, and
the magazine includes
a mounting unit in which a plurality of products are removably mountable in a row in a front-rear direction,
a pressing slider which is provided to be movable forward and backward along the mounting unit and urges the product mounted on the mounting unit forward, and
an output unit which outputs a notification command signal to the storage device according to a position of the pressing slider in the front-rear direction, and
the storage area notification control unit of the storage device notifies the storage area of the replenishment-required product aggregate in response to the notification command signal from the output unit.

13. The product dispensing system according to any one of claims 9 to 12, further comprising:
an input area notification control unit which performs a control to notify the storage area where the product aggregate needs to be placed when the product aggregate is replenished in the storage device; and
a replenishment timing storage unit which stores a timing when the product aggregate is replenished in the storage device in association with a type of the product aggregate.

14. The product dispensing system according to claim 13, wherein
in a case where the storage device is replenished with a plurality of the product aggregates of a same type at a time, the input area notification control unit preferentially notifies a plurality of the storage areas adjacent to each other or located near each other.

15. The product dispensing system according to claim 14, further comprising:
an input unit which receives an input of a quantity of the product aggregates replenished in the storage device, wherein
the input area notification control unit notifies the storage area where the product aggregate needs to be placed according to the quantity input to the input unit.

16. An inventory abnormality detection method comprising:
detecting an inventory abnormality on a basis of a difference between the total inventory quantity managed by the total inventory quantity management unit of the product dispensing system according to claim 9 or 10 and an inventory quantity on a book of a store.
